(19) **Europäisches Patentamt / European Patent Office / Office européen des brevets**

(11) **EP 4 373 004 A1**

(12) **EUROPEAN PATENT APPLICATION**
published in accordance with Art. 153(4) EPC

(43) Date of publication:
22.05.2024 Bulletin 2024/21

(21) Application number: 22852223.1

(22) Date of filing: 03.08.2022

(51) International Patent Classification (IPC):
H04B 7/0456 (2017.01)      H04B 17/309 (2015.01)
H04B 7/06 (2006.01)

(52) Cooperative Patent Classification (CPC):
H04B 7/0456; H04B 7/06; H04B 17/309; H04L 5/00

(86) International application number:
PCT/CN2022/109899

(87) International publication number:
WO 2023/011511 (09.02.2023 Gazette 2023/06)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.08.2021 CN 202110898806

(71) Applicant: Huawei Technologies Co., Ltd.
Shenzhen, Guangdong 518129 (CN)

(72) Inventors:
• FAN, Li
Shenzhen, Guangdong 518129 (CN)

• GE, Shibin
Shenzhen, Guangdong 518129 (CN)
• YUAN, Yiling
Shenzhen, Guangdong 518129 (CN)
• GAO, Junhui
Shenzhen, Guangdong 518129 (CN)
• ZHANG, Didi
Shenzhen, Guangdong 518129 (CN)
• ZHONG, Zhimeng
Shenzhen, Guangdong 518129 (CN)

(74) Representative: Gill Jennings & Every LLP
The Broadgate Tower
20 Primrose Street
London EC2A 2ES (GB)

(54) **INFORMATION FEEDBACK METHOD AND RELATED APPARATUS**

(57) Embodiments of this application disclose an information feedback method and a related apparatus. The method includes: A terminal device sends first information to a network apparatus, where the first information includes a total quantity of nonzero coefficients at all spatial layers of the terminal device, and the nonzero coefficients are used to constitute a weighting coefficient matrix in a codebook. The first information further includes first indication information, and the first indication information indicates whether second information sent by the terminal device to the network apparatus carries indication information of a location of a nonzero coefficient. The terminal device sends the second information to the network apparatus. In this way, a coding bit rate of the indication information sent by the terminal device to the network apparatus is reduced while correct data transmission is ensured.

FIG. 5

**Description**

This application claims priority to Chinese Patent Application No. 202110898806.7, filed with the China National Intellectual Property Administration on August 5, 2021 and entitled "INFORMATION FEEDBACK METHOD AND RELATED APPARATUS", which is incorporated herein by reference in its entirety.

**TECHNICAL FIELD**

This application relates to the field of communication technologies, and in particular, to an information feedback method and a related apparatus.

**BACKGROUND**

A massive multiple-input multiple-output (massive MIMO (multiple-input multiple-output)) technology is one of key technologies of 5th generation (5th Generation, 5G) communication systems recognized in the industry. In the massive MIMO, large-scale antennas are used, so that spectrum efficiency is significantly improved. Accuracy of channel state information (channel state information, CSI) obtained by a network apparatus determines performance of the massive MIMO to a large extent. In a frequency division duplex (frequency division duplex, FDD) system or a time division duplex (time division duplex, TDD) system in which channel reciprocity cannot be well satisfied, a codebook is usually used to quantize CSI. Therefore, codebook design is a key problem of the massive MIMO.

A codebook in the R17 specification for a new radio (new radio, NR) system is used as an example. A structure of the NR R17 codebook is $W = W_1 W_2 W_f^H$ . $W_1$ is a port selection matrix, $W_2$ is a weighting coefficient matrix, and $W_f$ is a frequency domain basis matrix. A weighting coefficient is a quantized value obtained by quantizing a coefficient of a channel state information reference signal (channel state information reference signal, CSI-RS) port according to a quantization rule, the coefficient of the CSI-RS port is not 0, and the weighting coefficient is also referred to as a nonzero coefficient.

In the conventional technology, a total quantity of nonzero coefficients reported by a terminal device may be less than a total quantity of optional nonzero coefficients indicated by the network apparatus to the terminal device. With evolution of a protocol, the total quantity of nonzero coefficients reported by the terminal device may be equal to the total quantity of optional nonzero coefficients indicated by the network apparatus to the terminal device. Therefore, a more efficient information feedback method is required.

**SUMMARY**

According to a first aspect, an embodiment of this application provides an information feedback method. The method includes: A terminal device sends first information to a network apparatus, where the first information includes a total quantity of nonzero coefficients at all spatial layers of the terminal device, and the nonzero coefficients are used to constitute a weighting coefficient matrix in a codebook. The first information further includes first indication information, and the first indication information indicates whether second information sent by the terminal device to the network apparatus carries indication information of a location of a nonzero coefficient. The terminal device sends the second information to the network apparatus, where the first information and the second information are used to determine channel state information CSI.

Specifically, for a space-frequency dual-domain compression codebook, precoding matrix indicators (precoding matrix indicators, PMIs) of all subbands are compressed in frequency domain, and a structure of the codebook is:

$$W = W_1 W_2 W_f^H.$$

W is the codebook, $W_1 \in \mathbb{N}^{(2N_1 N_2) \times K_1}$ is a port selection matrix, $W_2 \in \mathbb{C}^{K_1 \times M_V}$ is a combination coefficient matrix, $W_f \in \mathbb{C}^{N_3 \times M_V}$ is a frequency domain basis matrix, $N_1$ and $N_2$ are respectively a quantity of horizontal antenna ports and a quantity of vertical antenna ports of the network apparatus, $K_1$ is a quantity of channel state information reference signal CSI-RS ports that the network apparatus allows the terminal device to select, $M_V$ is a quantity of frequency domain bases, and $N_3$ is a quantity of frequency domain subbands (or a quantity of rows of a frequency domain compression matrix $W_f$).

A combination coefficient in the combination coefficient matrix is also referred to as a weighting coefficient or a nonzero coefficient. Therefore, the nonzero coefficient in this embodiment of this application is defined as follows: The nonzero coefficients are used to constitute a combination coefficient matrix (or the weighting coefficient matrix).

For the total quantity of nonzero coefficients at all the spatial layers of the terminal device, details are as follows:

A quantity of nonzero coefficients corresponding to a CSI-RS port at an $l$th spatial layer is assumed as $K_l^{NZ}$, where the nonzero coefficient is a nonzero coefficient to be fed back. $K_l^{NZ} \leq K_0$, where $M_V$ is the quantity of frequency domain bases (or referred to as a quantity of columns of the frequency domain compression matrix), I is an index of the spatial layer, v is an index of a spatial layer of the terminal device, and a maximum value of v is a maximum quantity of spatial layers of all the spatial layers. A total quantity of nonzero coefficients corresponding to CSI-RS ports at all the spatial layers (namely, v spatial layers) (also referred to as the total quantity of nonzero coefficients at all the spatial layers of the terminal device) is $K^{NZ}$. $K^{NZ} = \sum_{l=1}^{v} K_l^{NZ}$. $K_0$ is a value agreed on by the terminal device and the network apparatus or predefined in a protocol, and is used to control a quantity of coefficients to be fed back.

In this embodiment of this application, the first information sent by the terminal device to the network apparatus includes the first indication information, the first indication information indicates whether the second information sent by the terminal device to the network apparatus carries the indication information of the location of the nonzero coefficient, and the nonzero coefficients are used to constitute the weighting coefficient matrix of the codebook. Therefore, according to the foregoing method, while correct data transmission is ensured, a coding bit rate of the indication information sent by the terminal device to the network apparatus is reduced, a feedback coding bit rate is reduced, and a demodulation signal-to-noise ratio is reduced.

With reference to the first aspect, in a possible implementation of the first aspect, the first information and the second information are carried in a same piece of signaling.

With reference to the first aspect, in a possible implementation of the first aspect, the same piece of signaling is uplink control information (uplink control information, UCI), the first information is a first part UCI (UCI part 1) of the uplink control information, and the second information is a second part UCI (UCI part 2) of the uplink control information.

Specifically, the terminal device first determines the first information and the second information. In a possible implementation, the first information and the second information are sent by using a same piece of signaling, or the first information and the second information are carried in a same piece of signaling. The same piece of signaling is a channel state information CSI feedback on a physical uplink shared channel (PUSCH) in the terminal device, or the same piece of signaling is a channel state information CSI feedback on a physical uplink control channel (PUCCH) in the terminal device.

In another possible implementation, the first information and the second information are carried in different signaling, in other words, the first information and the second information are sent by using different signaling.

The following describes the UCI. After completing channel measurement, the terminal device needs to report measurement information to the network apparatus by using the uplink control information (uplink control information, UCI). Currently, an R16 codebook is used as an example, and it is specified that UCI includes two parts: a UCI part 1 and a UCI part 2. The UCI part 1 includes a total quantity of nonzero coefficients at all spatial layers, and the UCI part 2 includes indication information indicating a location of a nonzero coefficient at each spatial layer.

Currently, the UCI is defined in the protocol as follows: For Type I, Type II and Enhanced Type II CSI feedbacks sent on PUSCHs, a CSI report includes two parts. A part 1 has a fixed payload size and is used to identify a quantity of information bits in a part 2. The part 1 needs to be sent in its entirety before the part 2. ("For Type I, Type II and Enhanced Type II CSI feedback on PUSCH, a CSI report comprises of two parts. Part 1 has a fixed payload size and is used to identify the number of information bits in Part 2. Part 1 shall be transmitted in its entirety before Part 2".)

Specifically, the UCI part 1 may include one or more of the following information: $K^{NZ}$, an RI, a CQI, or the like.

The UCI part 2 may include one or more of the following information: indication information of a location of a nonzero coefficient (for example, a bitmap (bitmap)), a strongest coefficient indicator (strongest coefficient indicator, SCI), or CSI-RS port selection indication information, including but not limited to: an FD basis subset selection indicator (FD basis subset selection indicator), a weighting coefficient (also referred to as a combination coefficient, a nonzero coefficient, or an LC coefficient), an SD basis subset selection indicator (SD basis subset selection indicator), an SD oversampling factor (oversampling factor), or the like.

With reference to the first aspect, in a possible implementation of the first aspect, a maximum quantity of nonzero coefficients of the terminal device is equal to a maximum quantity of nonzero coefficients that the network apparatus allows the terminal device to report.

Specifically, $K^{NZ}$ is less than or equal to $C*K_0$. $K_0$ is the value agreed on by the terminal device and the network apparatus or predefined in the protocol, and is used to control the quantity of coefficients to be fed back. C is an integer greater than or equal to 1. Alternatively, $K_0$ is a value obtained through calculation based on configuration information delivered by the network apparatus.

Currently, the protocol specifies that C is a positive integer less than or equal to 2, in other words, $K^{NZ} \leq 2K_0$. In this embodiment of this application, $K^{NZ} \leq 2K_0$ is used as an example for description. It may be understood that, with evolution of the protocol, C may be another positive integer, for example, 3, 4, or 5. This is not limited in this embodiment of this application.

It may be understood that $M_V$ is the quantity of frequency domain bases, and $M_V$ may be different or may be the same for different spatial layers (in other words, when v has different values). This is not limited herein.

For $K_0$, $K_0 = \lceil \beta K_1 M_v \rceil$. $M_v$ is the quantity of frequency domain bases at a $v^{th}$ spatial layer, $K_1$ is a quantity of channel state information reference signal CSI-RS ports selected by the terminal device, and $\beta$ is a proportion value. Currently, the protocol specifies that $\beta$ is less than 1. $\beta$ is defined as follows: a ratio of a total quantity of nonzero coefficients reported by the terminal device to a quantity of nonzero coefficients that the network apparatus allows the terminal device to report.

Further, $\beta$ is defined as follows: a ratio of the total quantity of nonzero coefficients reported by the terminal device to the maximum quantity of nonzero coefficients that the network apparatus allows the terminal device to report, that is,

$$\beta = \frac{the\ total\ quantity\ of\ non-zero\ coefficients\ reported\ by\ the\ terminal\ device}{the\ maximum\ quantity\ of\ non-zero\ coefficients\ that\ the\ network\ apparatus\ allows\ the\ terminal\ device\ to\ report}.$$

It should be noted that different spatial layers may use same or different $\beta$. For example, $\beta$ of a spatial layer 1 is $\beta 1$, and $\beta$ of a spatial layer 2 is $\beta 2$. For another example, the spatial layer 1 and the spatial layer 2 use same $\beta$. However, in this embodiment of this application, when different spatial layers use different $\beta$, $\beta = 1$. For example, $\beta 1 = \beta 2 = 1$.

That $\beta = 1$ may be understood as follows: The quantity of nonzero coefficients that the network apparatus allows the terminal device to report is equal to a quantity of all nonzero coefficients on a CSI-RS port and a frequency domain basis that are selected by the terminal device.

With reference to the first aspect, in a possible implementation of the first aspect, the first indication information includes N bits, N is an integer greater than or equal to 1, and N is equal to a rank (rank) of the terminal device. Each bit in the first indication information corresponds to a nonzero coefficient at each spatial layer, and a bit in the first indication information indicates whether the second information carries indication information of a location of a nonzero coefficient at a spatial layer corresponding to the bit.

Specifically, when the rank of the terminal device is 1, the first indication information includes one bit. For example, when the bit is "0", it indicates that the second information does not carry indication information of a location of a nonzero coefficient at a spatial layer (namely, a spatial layer 1) corresponding to the bit; when the bit is "1", it indicates that the second information carries the indication information of the location of the nonzero coefficient at the spatial layer (namely, the spatial layer 1) corresponding to the bit.

Specifically, when the rank of the terminal device is 2, the first indication information includes two bits. For example, when the first bit is "0", it indicates that the second information does not carry indication information of a location of a nonzero coefficient at a spatial layer (for example, a spatial layer 1) corresponding to the first bit; when the first bit is "1", it indicates that the second information carries the indication information of the location of the nonzero coefficient at the spatial layer (namely, the spatial layer 1) corresponding to the first bit. When the second bit is "0", it indicates that the second information does not carry indication information of a location of a nonzero coefficient at a spatial layer (for example, a spatial layer 2) corresponding to the second bit; when the second bit is "1", it indicates that the second information carries the indication information of the location of the nonzero coefficient at the spatial layer (namely, the spatial layer 2) corresponding to the second bit.

It may be understood that, in the first indication information, the second bit may alternatively indicate a first spatial layer, and the first bit may alternatively indicate a second spatial layer (opposite to the solution described in the previous paragraph). This is not limited herein.

Specifically, when the rank of the terminal device is 3, the first indication information includes three bits. For example, when the first bit is "0", it indicates that the second information does not carry indication information of a location of a nonzero coefficient at a spatial layer (for example, a spatial layer 1) corresponding to the first bit; when the first bit is "1", it indicates that the second information carries the indication information of the location of the nonzero coefficient at the spatial layer (namely, the spatial layer 1) corresponding to the first bit. When the second bit is "0", it indicates that the second information does not carry indication information of a location of a nonzero coefficient at a spatial layer (for example, a spatial layer 2) corresponding to the second bit; when the second bit is "1", it indicates that the second information carries the indication information of the location of the nonzero coefficient at the spatial layer (namely, the spatial layer 1) corresponding to the second bit. When the third bit is "0", it indicates that the second information does not carry indication information of a location of a nonzero coefficient at a spatial layer (for example, a spatial layer 3) corresponding to the third bit; when the third bit is " 1", it indicates that the second information carries the indication information of the location of the nonzero coefficient at the spatial layer (namely, the spatial layer 3) corresponding to the third bit.

When the rank of the terminal device is 4, the first indication information is similar to that in the foregoing solutions, and details are not described herein.

With reference to the first aspect, in a possible implementation of the first aspect, the first indication information includes N bits, N is an integer greater than or equal to 1, and N is equal to a maximum value of an optional rank limited (configured) by the network apparatus for the terminal device. For example, the maximum value of the optional rank configured by the network apparatus for the terminal device is 3, and the first indication information includes three bits. In this case, a maximum value of an optional rank of the terminal device is 3. For example, a rank of the terminal device is rank=2. In this case, any two bits in the first indication information (three bits) separately correspond to a spatial layer 1 and a spatial layer 2, and one remaining bit is not detected.

With reference to the first aspect, in a possible implementation of the first aspect, the first indication information includes one bit, and the first indication information indicates whether the second information carries indication information of a location of a nonzero coefficient at a first spatial layer.

In another possible implementation, the first indication information may include only one bit. The bit indicates whether the second information carries indication information of a location of a nonzero coefficient at a first spatial layer. For example, when the bit is "0", it indicates that the second information does not carry the indication information of the location of the nonzero coefficient at the first spatial layer; when the bit is "1", it indicates that the second information carries the indication information of the location of the nonzero coefficient at the first spatial layer. For another example, when the bit is "1", it indicates that the second information does not carry the indication information of the location of the nonzero coefficient at the first spatial layer; when the bit is "0", it indicates that the second information carries the indication information of the location of the nonzero coefficient at the first spatial layer.

In another possible implementation, the terminal device and the network apparatus may agree on whether a spatial layer indicated by one bit is a first spatial layer or a second spatial layer, or the protocol may predefine whether the bit indicates the first spatial layer or the second spatial layer. For example, the bit indicates the first spatial layer. When the bit is "0", it indicates that the second information does not carry indication information of a location of a nonzero coefficient at the first spatial layer; when the bit is "1", it indicates that the second information carries the indication information of the location of the nonzero coefficient at the first spatial layer. In this case, the second information carries indication information of a location of a nonzero coefficient at the second spatial layer by default.

With reference to the first aspect, in a possible implementation of the first aspect, when the rank of the terminal device is 1, the first information may alternatively not include the first indication information, and the network apparatus determines, based on $K^{NZ}$ included in the first information, whether the second information from the terminal device carries the indication information of the location of the nonzero coefficient. Specifically, when $K^{NZ} = K_1 M_1$, the second information does not carry the indication information of the location of the nonzero coefficient. $M_1$ is a quantity of frequency domain bases at the first spatial layer, and $K_1$ is the quantity of channel state information reference signal CSI-RS ports selected by the terminal device. In another possible implementation, when the rank of the terminal device is 2, the first information may alternatively not include the first indication information, and the network apparatus determines, based on $K^{NZ}$ included in the first information, whether the second information from the terminal device carries the indication information of the location of the nonzero coefficient. Specifically, when $K^{NZ} = 2 * K_1 M_v$, the second information does not carry the indication information of the location of the nonzero coefficient. $M_v$ is the quantity of frequency domain bases at the $v^{th}$ spatial layer, $K_1$ is the quantity of channel state information reference signal CSI-RS ports selected by the terminal device, and v is a positive integer.

Optionally, $M_1 = 1$. It may be understood that $M_1$ may alternatively be greater than 1. This is not limited herein.

With reference to the first aspect, in a possible implementation of the first aspect, the first indication information includes two bits, and the first indication information implements four combinations by using the two bits, where the four combinations include a first combination, a second combination, a third combination, and a fourth combination. The first indication information jointly indicates, by using the four combinations, whether the second information carries indication information of a location of a nonzero coefficient at each spatial layer.

For example, the first combination is (00), the second combination is (01), the third combination is (10), and the fourth combination is (11). In another example, the first combination may alternatively be (10), or the first combination may alternatively be (01), or the first combination may alternatively be (11). This is not limited herein.

With reference to the first aspect, in a possible implementation of the first aspect, specifically, in a case in which $K^{NZ} \leq 2 * K_1 M_V$, when a rank of the terminal device is equal to 1, and the first indication information is the first combination, the first indication information indicates that the second information does not carry indication information of a location of a nonzero coefficient at a first spatial layer; or when the rank of the terminal device is equal to 1, and the first indication information is the second combination, the third combination, or the fourth combination, the first indication information indicates that the second information carries the indication information of the location of the nonzero coefficient at the first spatial layer.

In another example, when a rank of the terminal device is equal to 1, and the first indication information is the first combination or the second combination, the first indication information indicates that the second information does not carry indication information of a location of a nonzero coefficient at a first spatial layer; when the rank of the terminal device is equal to 1, and the first indication information is the third combination or the fourth combination, the first indication information indicates that the second information carries the indication information of the location of the nonzero coefficient at the first spatial layer.

With reference to the first aspect, in a possible implementation of the first aspect, specifically, in a case in which $K^{NZ} \leq 2 * K_1 M_V$, when a rank of the terminal device is equal to 2, and the first indication information is the first combination, the first indication information indicates that the second information carries indication information of locations of nonzero coefficients at the first spatial layer and a second spatial layer; when the rank of the terminal device is equal to 2, and the first indication information is the second combination, the first indication information indicates that the second information does not carry the indication information of the location of the nonzero coefficient at the first spatial layer, and the second information carries indication information of a location of a nonzero coefficient at the second spatial layer; when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer; or when the rank of the terminal device is equal to 2, and the first indication information is the fourth combination, the first indication information indicates that the second information does not carry the indication information of the locations of the nonzero coefficients at the first spatial layer and the second spatial layer.

With reference to the first aspect, in a possible implementation of the first aspect, when a rank of the terminal device is greater than 2, and the first indication information is the first combination, the first indication information indicates that the second information carries indication information of locations of the nonzero coefficients at all the spatial layers; when the rank of the terminal device is greater than 2, and the first indication information is the second combination, the first indication information indicates that the second information does not carry the indication information of the location of the nonzero coefficient at the first spatial layer, and the second information carries indication information of locations of nonzero coefficients at spatial layers other than the first spatial layer in all the spatial layers; when the rank of the terminal device is greater than 2, and the first indication information is the third combination, the first indication information indicates that the second information does not carry the indication information of the location of the nonzero coefficient at the second spatial layer, and the second information carries indication information of locations of nonzero coefficients at spatial layers other than the second spatial layer in all the spatial layers; when the rank of the terminal device is greater than 2, and the first indication information is the fourth combination, the first indication information indicates that the second information does not carry indication information of a location of a nonzero coefficient at a third spatial layer, and the second information carries indication information of locations of nonzero coefficients at spatial layers other than the third spatial layer in all the spatial layers.

With reference to the first aspect, in a possible implementation of the first aspect, the terminal device receives first configuration information from the network apparatus, where the first configuration information is used to configure a set of ranks that are optional for the terminal device. The terminal device selects, based on the first configuration information, the rank of the terminal device from the set of ranks that are optional for the terminal device. The terminal device sends a rank indicator RI to the network apparatus, where the RI indicates the rank of the terminal device.

For example, the first configuration information may be "typeII-RI-Restriction-r17". For example, when "typeII-RI-Restriction-r17" is equal to "0011", the first configuration information is used to configure a quantity of ranks in the set of ranks that are optional for the terminal device to be 2, in other words, ranks that are optional for the terminal device are a rank 1 and a rank 2.

After receiving the first configuration information, the terminal device selects the rank of the terminal device from the set of ranks that are optional for the terminal device. The rank of the terminal device may be considered as a subset of the set of ranks that are optional for the terminal device. It should be noted that the rank of the terminal device may be a rank supported by the terminal device, or may be a rank selected by the terminal device. This is not limited herein.

After determining the rank of the terminal device, the terminal device reports the rank of the terminal device to the network apparatus by using the rank indicator (RI). A length of the RI is $min(2, \lceil log_2 n_{RI} \rceil)$, where $n_{RI}$ is a quantity of RIs that the network apparatus allows the terminal device to report.

For example, when "typeII-RI-Restriction-r17" is equal to "0011", the first configuration information is used to configure a quantity of ranks in the set of ranks that are optional for the terminal device to be 2, in other words, the first configuration information is used to configure ranks that are optional for the terminal device to be a rank 1 and a rank 2. If the RI is "0", the RI indicates that the rank selected (or determined) by the terminal device based on the first configuration information is 1 (in other words, the rank of the terminal device is rank=1).

With reference to the first aspect, in a possible implementation of the first aspect, the rank of the terminal device is configured by the network apparatus. The rank of the terminal device is configured (or limited) by the network apparatus. For example, when the network apparatus configures the rank of the terminal device to be 2, the rank of the terminal device is 2.

The rank of the terminal device is equal to a quantity of spatial layers of the terminal device. For example, when the rank of the terminal device is 1, the quantity of spatial layers of the terminal device is 1, and the terminal device supports the first spatial layer (the spatial layer 1, or referred to as a layer 1); when the rank of the terminal device is 2, the quantity of spatial layers of the terminal device is 2, and the terminal device supports the first spatial layer (the spatial layer 1, or referred to as the layer 1) and the second spatial layer (the spatial layer 2, or referred to as a layer 2). The rest may be deduced by analogy.

With reference to the first aspect, in a possible implementation of the first aspect, the indication information of the location of the nonzero coefficient is a bitmap (bitmap).

According to a second aspect, an embodiment of this application provides an information feedback method. The method includes:

A terminal device sends first information to a network apparatus, where the first information includes a total quantity of nonzero coefficients at all spatial layers of the terminal device, and a weighting coefficient matrix in a codebook includes the nonzero coefficient. When a rank of the terminal device is equal to 1, and the total quantity of nonzero coefficients at all the spatial layers of the terminal device included in the first information is equal to $K_1M_1$, second information sent by the terminal device to the network apparatus does not carry indication information of a location of a nonzero coefficient, where $M_1$ is a quantity of frequency domain bases at a first spatial layer, and $K_1$ is a quantity of channel state information reference signal CSI-RS ports selected by the terminal device. When the rank of the terminal device is equal to 2, and the total quantity of nonzero coefficients at all the spatial layers of the terminal device included in the first information is equal to $2 * K_1M_v$, the second information sent by the terminal device to the network apparatus does not carry the indication information of the location of the nonzero coefficient, where $M_v$ is a quantity of frequency domain bases at a $v^{th}$ spatial layer, and v is a positive integer. The terminal device sends the second information to the network apparatus, where the first information and the second information are used to determine channel state information CSI.

In this embodiment of this application, the network apparatus may determine, based on the total quantity of nonzero coefficients at all the spatial layers of the terminal device, whether the second information includes the indication information of the location of the nonzero coefficient. Therefore, a coding bit rate of indication information sent by the terminal device to the network apparatus is reduced while correct data transmission is ensured.

With reference to the second aspect, in a possible implementation of the second aspect, the first information and the second information are carried in a same piece of signaling, the same piece of signaling is uplink control information UCI, the first information is a UCI part 1 of the uplink control information, and the second information is a UCI part 2 of the uplink control information.

Specifically, the terminal device first determines the first information and the second information. In a possible implementation, the first information and the second information are sent by using a same piece of signaling, or the first information and the second information are carried in a same piece of signaling. The same piece of signaling is a channel state information CSI feedback on a physical uplink shared channel (PUSCH) in the terminal device, or the same piece of signaling is a channel state information CSI feedback on a physical uplink control channel (PUCCH) in the terminal device.

In another possible implementation, the first information and the second information are carried in different signaling, in other words, the first information and the second information are sent by using different signaling.

With reference to the second aspect, in a possible implementation of the second aspect, when the rank of the terminal device is determined by the terminal device, the first information includes a rank indicator RI, and the RI indicates the rank of the terminal device; when the rank of the terminal device is configured by the network apparatus, the first information does not include the RI.

With reference to the second aspect, in a possible implementation of the second aspect, when the first information is the UCI part 1, an existing UCI part 1 is not modified. The network apparatus determines, based on the total quantity ($K^{NZ}$) of nonzero coefficients at all the spatial layers of the terminal device in the first information, whether the second information (the UCI part 2) carries the indication information of the location of the nonzero coefficient. In this way, when a coding bit rate for sending the UCI by the terminal device to the network apparatus is reduced, modifications to a protocol are reduced.

With reference to the second aspect, in a possible implementation of the second aspect, when rank=1, in other words, when the rank of the terminal device is 1, the first information may not carry first indication information. The network apparatus determines, based on $K^{NZ}$ reported by the terminal device, whether the second information from the terminal device carries indication information of a location of a nonzero coefficient at the first spatial layer.

$K^{NZ}$ may be reported by using the first information. For example, $K^{NZ}$ is reported by using the UCI part 1.

When $K^{NZ} = K_1M_v$, because the terminal device may completely report the nonzero coefficient (a nonzero coefficient of the weighting coefficient matrix) at the first spatial layer, the second information may not carry the indication information of the location of the nonzero coefficient at the first spatial layer.

With reference to the second aspect, in a possible implementation of the second aspect, when $K^{NZ} = 2 * K_1M_v$ and rank=2, the first information may not carry first indication information. The network apparatus determines, based on $K^{NZ}$ reported by the terminal device, whether the second information from the terminal device carries indication information of locations of nonzero coefficients at the first spatial layer and a second spatial layer.

When $K^{NZ} = 2 * K_1M_v$, because the terminal device may completely report the nonzero coefficients (nonzero coefficients of the weighting coefficient matrix) at the first spatial layer and the second spatial layer, the first information may not carry the first indication information, and the second information may not carry the indication information of the locations of the nonzero coefficients at the first spatial layer and the second spatial layer.

With reference to the second aspect, in a possible implementation of the second aspect, when the rank of the terminal device is equal to 1, and the total quantity of nonzero coefficients at all the spatial layers of the terminal device included in the first information is less than $K_1M_1$, the second information sent by the terminal device to the network apparatus carries the indication information of the location of the nonzero coefficient. In other words, when $K^{NZ}$ in the UCI part 1 < $K_1M_1$ and rank=1, the second information sent by the terminal device to the network apparatus carries the indication information of the location of the nonzero coefficient, in other words, the UCI part 2 includes indication information (a bitmap) of a location of a nonzero coefficient at the first spatial layer. To ensure normal communication, when the rank of the terminal device is equal to 1 and $K^{NZ} < K_1M_1$ is satisfied for all the spatial layers of the terminal device, the second information sent by the terminal device to the network apparatus carries the indication information of the location of the nonzero coefficient.

With reference to the second aspect, in a possible implementation of the second aspect, when the rank of the terminal device is equal to 2, and the total quantity of nonzero coefficients at all the spatial layers of the terminal device included in the first information is less than $2 * K_1M_v$, the second information sent by the terminal device to the network apparatus carries indication information of locations of nonzero coefficients at the first spatial layer and a second spatial layer. In other words, when $K^{NZ}$ in the UCI part 1 < $2 * K_1M_v$ and rank=2, the second information sent by the terminal device to the network apparatus carries the indication information of the locations of the nonzero coefficients at the first spatial layer and the second spatial layer, in other words, the UCI part 2 includes indication information (a bitmap) of a location of a nonzero coefficient at the first spatial layer and indication information (a bitmap) of a location of a nonzero coefficient at the second spatial layer.

To ensure normal communication, when the rank of the terminal device is equal to 2, and the total quantity of nonzero coefficients at all the spatial layers of the terminal device $K^{NZ} < 2K_1M_1$, the second information sent by the terminal device to the network apparatus carries the indication information of the location of the nonzero coefficient.

With reference to the second aspect, in a possible implementation of the second aspect, when the rank of the terminal device is greater than 2, the second information sent by the terminal device to the network apparatus carries indication information of a location of a nonzero coefficient at each spatial layer. For example, rank=3, and the UCI part 2 includes indication information (a bitmap) of a location of a nonzero coefficient at the first spatial layer, indication information (a bitmap) of a location of a nonzero coefficient at a second spatial layer, and indication information (a bitmap) of a location of a nonzero coefficient at a third spatial layer.

According to a third aspect, an embodiment of this application provides an information feedback method. The method includes: A terminal device sends first information to a network apparatus, where the first information includes a quantity of nonzero coefficients at each spatial layer of the terminal device, and a weighting coefficient matrix in a codebook includes the nonzero coefficient. When a quantity of nonzero coefficients at any spatial layer in the first information is equal to $K_1M_v$, second information sent by the terminal device to the network apparatus does not carry indication information of a location of a nonzero coefficient at the spatial layer, where $M_v$ is a quantity of frequency domain bases at a $v^{th}$ spatial layer, $K_1$ is a quantity of channel state information reference signal CSI-RS ports selected by the terminal device, and v is a positive integer. The terminal device sends the second information to the network apparatus, where the first information and the second information are used to determine channel state information CSI.

Specifically, the terminal device sends the first information to the network apparatus, where the first information includes the quantity of nonzero coefficients at each spatial layer of the terminal device, and the weighting coefficient matrix in the codebook includes the nonzero coefficient. In other words, the first information (a UCI part 1) does not include a total quantity $K^{NZ}$ of nonzero coefficients at all spatial layers in the terminal device, but includes the quantity of nonzero coefficients at each spatial layer, for example, $K_l^{NZ}$, where $l$ is an index of a spatial layer, $l$ is greater than 1 and less than or equal to v, and v is a quantity of spatial layers of all the spatial layers in the terminal device. For example, when the network apparatus indicates that a rank supported by the terminal device is 2, the terminal device supports a first spatial layer and a second spatial layer, where the first information includes a quantity $K_1^{NZ}$ of nonzero coefficients at the first spatial layer and a quantity $K_2^{NZ}$ of nonzero coefficients at the second spatial layer.

The terminal device determines, based on the quantity of nonzero coefficients at any spatial layer, whether the second information (a UCI part 2) carries the indication information of the location of the nonzero coefficient at the spatial layer. For example, when the quantity $K_1^{NZ}$ of nonzero coefficients at the first spatial layer is equal to $K_1M_1$ (a maximum quantity of nonzero coefficients at the first spatial layer), the second information sent by the terminal device to the network apparatus does not carry indication information indicating a location of a nonzero coefficient at the first spatial layer. When the quantity of nonzero coefficients at the first spatial layer is $K_1^{NZ} < K_1M_1$ (the maximum quantity of nonzero coefficients at the first spatial layer), the second information sent by the terminal device to the network apparatus carries the indication information indicating the location of the nonzero coefficient at the first spatial layer.

In another example, when the quantity $K_2^{NZ}$ of nonzero coefficients at the second spatial layer is equal to $K_1M_2$ (a maximum quantity of nonzero coefficients at the second spatial layer), the second information sent by the terminal device to the network apparatus does not carry indication information indicating a location of a nonzero coefficient at the second spatial layer. When the quantity of nonzero coefficients at the second spatial layer is $K_2^{NZ} < K_1M_2$ (the maximum quantity of nonzero coefficients at the second spatial layer), the second information sent by the terminal device to the network apparatus carries the indication information indicating the location of the nonzero coefficient at the second spatial layer. $M_2$ is a quantity of frequency domain bases at the second spatial layer (or a quantity of columns of a frequency domain compression matrix at the second spatial layer).

With reference to the third aspect, in a possible implementation of the third aspect, the first information and the second information are carried in a same piece of signaling, the same piece of signaling is uplink control information UCI, the first information is a UCI part 1 of the uplink control information, and the second information is a UCI part 2 of the uplink control information.

With reference to the third aspect, in a possible implementation of the third aspect, when the quantity of nonzero coefficients at any spatial layer in the first information < $K_1M_v$, the second information sent by the terminal device to the network apparatus carries the indication information of the location of the nonzero coefficient.

According to a fourth aspect, an embodiment of this application provides a communication apparatus. The apparatus includes:

a transceiver module, configured to send first information to a network apparatus, where the first information includes a total quantity of nonzero coefficients at all spatial layers of a terminal device, and the nonzero coefficients are used to constitute a weighting coefficient matrix in a codebook.

The first information further includes first indication information, and the first indication information indicates whether second information sent by the terminal device to the network apparatus carries indication information of a location of a nonzero coefficient.

The transceiver module is further configured to send the second information to the network apparatus, where the first information and the second information are used to determine channel state information CSI.

In a possible implementation, the first information and the second information are carried in a same piece of signaling, the same piece of signaling is uplink control information UCI, the first information is a UCI part 1 of the uplink control information, and the second information is a UCI part 2 of the uplink control information.

In a possible implementation,
a maximum quantity of nonzero coefficients of the terminal device is equal to a maximum quantity of nonzero coefficients that the network apparatus allows the terminal device to report.

In a possible implementation,

the first indication information includes N bits, where N is an integer greater than or equal to 1, and N is equal to a rank of the terminal device; and
each bit in the first indication information corresponds to a nonzero coefficient at each spatial layer, and a bit in the first indication information indicates whether the second information carries indication information of a location of a nonzero coefficient at a spatial layer corresponding to the bit.

In a possible implementation,
the first indication information includes one bit, and the first indication information indicates whether the second information carries indication information of a location of a nonzero coefficient at a first spatial layer.

In a possible implementation,

the first information further includes a rank indicator RI, and the RI indicates the rank of the terminal device;

the first indication information includes two bits, and the first indication information implements four combinations by using the two bits, where the four combinations include a first combination, a second combination, a third combination, and a fourth combination; and

the first indication information jointly indicates, by using the four combinations and the RI, whether the second information carries indication information of a location of a nonzero coefficient at each spatial layer.

In a possible implementation,

when the rank of the terminal device is equal to 1, and the first indication information is the first combination, the first indication information indicates that the second information does not carry indication information of a location of a nonzero coefficient at a first spatial layer; or

when the rank of the terminal device is equal to 1, and the first indication information is the second combination, the third combination, or the fourth combination,

the first indication information indicates that the second information carries the indication information of the location of the nonzero coefficient at the first spatial layer.

In a possible implementation,

when the rank of the terminal device is equal to 2, and the first indication information is the first combination, the first indication information indicates that the second information carries indication information of locations of nonzero coefficients at the first spatial layer and a second spatial layer;

when the rank of the terminal device is equal to 2, and the first indication information is the second combination, the first indication information indicates that the second information does not carry the indication information of the location of the nonzero coefficient at the first spatial layer, and the second information carries indication information of a location of a nonzero coefficient at the second spatial layer;

when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer; or

when the rank of the terminal device is equal to 2, and the first indication information is the fourth combination, the first indication information indicates that the second information does not carry the indication information of the locations of the nonzero coefficients at the first spatial layer and the second spatial layer.

In a possible implementation,

when the rank of the terminal device is greater than 2, and the first indication information is the first combination, the first indication information indicates that the second information carries indication information of locations of the nonzero coefficients at all the spatial layers;

when the rank of the terminal device is greater than 2, and the first indication information is the second combination, the first indication information indicates that the second information does not carry the indication information of the location of the nonzero coefficient at the first spatial layer, and the second information carries indication information of locations of nonzero coefficients at spatial layers other than the first spatial layer in all the spatial layers;

when the rank of the terminal device is greater than 2, and the first indication information is the third combination, the first indication information indicates that the second information does not carry the indication information of the location of the nonzero coefficient at the second spatial layer, and the second information carries indication information of locations of nonzero coefficients at spatial layers other than the second spatial layer in all the spatial layers; or

when the rank of the terminal device is greater than 2, and the first indication information is the fourth combination, the first indication information indicates that the second information does not carry indication information of a location of a nonzero coefficient at a third spatial layer, and the second information carries indication information of locations of nonzero coefficients at spatial layers other than the third spatial layer in all the spatial layers.

In a possible implementation,

the transceiver module is further configured to receive first configuration information from the network apparatus, where the first configuration information is used to configure a set of ranks that are optional for the terminal device; a processing module is configured to select, based on the first configuration information, the rank of the terminal device from the set of ranks that are optional for the terminal device; and

the transceiver module is further configured to send the rank indicator RI to the network apparatus, where the RI indicates the rank of the terminal device.

In a possible implementation,
the rank of the terminal device is configured by the network apparatus.

According to a fifth aspect, an embodiment of this application provides a communication apparatus. The apparatus includes:
a transceiver module, configured to send first information to a network apparatus, where the first information includes a total quantity of nonzero coefficients at all spatial layers of a terminal device and a rank indicator RI, the RI indicates a rank of the terminal device, and a weighting coefficient matrix in a codebook includes the nonzero coefficient.

When the rank of the terminal device is equal to 1, and the total quantity of nonzero coefficients at all the spatial layers of the terminal device included in the first information is equal to $K_1M_1$, second information sent by the terminal device to the network apparatus does not carry indication information of a location of a nonzero coefficient, where $M_1$ is a quantity of frequency domain bases at a first spatial layer, and $K_1$ is a quantity of channel state information reference signal CSI-RS ports selected by the terminal device.

When the rank of the terminal device is equal to 2, and the total quantity of nonzero coefficients at all the spatial layers of the terminal device included in the first information is equal to $2 * K_1M_v$, the second information sent by the terminal device to the network apparatus does not carry the indication information of the location of the nonzero coefficient, where $M_v$ is a quantity of frequency domain bases at a $v^{th}$ spatial layer, $K_1$ is the quantity of channel state information reference signal CSI-RS ports selected by the terminal device, and v is a positive integer.

The transceiver module is further configured to send the second information to the network apparatus, where the first information and the second information are used to determine channel state information CSI.
In a possible implementation,
the first information and the second information are carried in a same piece of signaling, the same piece of signaling is uplink control information UCI, the first information is a UCI part 1 of the uplink control information, and the second information is a UCI part 2 of the uplink control information.
In a possible implementation,
when the rank of the terminal device is equal to 1, and the total quantity of nonzero coefficients at all the spatial layers of the terminal device included in the first information is less than $K_1M_1$, the second information sent by the terminal device to the network apparatus carries the indication information of the location of the nonzero coefficient.

In a possible implementation,
when the rank of the terminal device is equal to 2, and the total quantity of nonzero coefficients at all the spatial layers of the terminal device included in the first information is less than $2 * K_1M_v$, the second information sent by the terminal device to the network apparatus carries indication information of locations of nonzero coefficients at the first spatial layer and a second spatial layer.

In a possible implementation,
when the rank of the terminal device is greater than 2, the second information sent by the terminal device to the network apparatus carries indication information of a location of a nonzero coefficient at each spatial layer.

According to a sixth aspect, an embodiment of this application provides a communication apparatus. The apparatus includes:
a transceiver module, configured to send first information to a network apparatus, where the first information includes a quantity of nonzero coefficients at each spatial layer of a terminal device, and a weighting coefficient matrix in a codebook includes the nonzero coefficient.

The transceiver module is further configured to: when the quantity of nonzero coefficients at any spatial layer in the first information is equal to $K_1M_v$, second information sent to the network apparatus does not carry indication information indicating a location of a nonzero coefficient at the spatial layer, where $M_v$ is a quantity of frequency domain bases at a $v^{th}$ spatial layer, $K_1$ is a quantity of channel state information reference signal CSI-RS ports selected by the terminal device, and v is a positive integer.

The transceiver module is further configured to send the second information to the network apparatus, where the first information and the second information are used to determine channel state information CSI.

In a possible implementation,
the first information and the second information are carried in a same piece of signaling, the same piece of signaling is uplink control information UCI, the first information is a UCI part 1 of the uplink control information, and the second information is a UCI part 2 of the uplink control information.

In a possible implementation,
the transceiver module is further configured to: when the quantity of nonzero coefficients at any spatial layer in the first information $< K_1 M_v$, the second information sent to the network apparatus carries the indication information of the location of the nonzero coefficient.

According to a seventh aspect, an embodiment of this application provides a communication apparatus. The apparatus includes:
a transceiver, configured to send first information to a network apparatus, where the first information includes a total quantity of nonzero coefficients at all spatial layers of a terminal device, and the nonzero coefficients are used to constitute a weighting coefficient matrix in a codebook.

The first information further includes first indication information, and the first indication information indicates whether second information sent by the terminal device to the network apparatus carries indication information of a location of a nonzero coefficient.

The transceiver is further configured to send the second information to the network apparatus, where the first information and the second information are used to determine channel state information CSI.

In a possible implementation,
the first information and the second information are carried in a same piece of signaling, the same piece of signaling is uplink control information UCI, the first information is a UCI part 1 of the uplink control information, and the second information is a UCI part 2 of the uplink control information.

In a possible implementation,
a maximum quantity of nonzero coefficients of the terminal device is equal to a maximum quantity of nonzero coefficients that the network apparatus allows the terminal device to report.

In a possible implementation,

the first indication information includes N bits, where N is an integer greater than or equal to 1, and N is equal to a rank of the terminal device; and
each bit in the first indication information corresponds to a nonzero coefficient at each spatial layer, and a bit in the first indication information indicates whether the second information carries indication information of a location of a nonzero coefficient at a spatial layer corresponding to the bit.

In a possible implementation,
the first indication information includes one bit, and the first indication information indicates whether the second information carries indication information of a location of a nonzero coefficient at a first spatial layer.

In a possible implementation,

the first information further includes a rank indicator RI, and the RI indicates the rank of the terminal device;
the first indication information includes two bits, and the first indication information implements four combinations by using the two bits, where the four combinations include a first combination, a second combination, a third combination, and a fourth combination; and
the first indication information jointly indicates, by using the four combinations and the RI, whether the second information carries indication information of a location of a nonzero coefficient at each spatial layer.

In a possible implementation,

when the rank of the terminal device is equal to 1, and the first indication information is the first combination, the first indication information indicates that the second information does not carry indication information of a location of a nonzero coefficient at a first spatial layer; or
when the rank of the terminal device is equal to 1, and the first indication information is the second combination, the third combination, or the fourth combination,
the first indication information indicates that the second information carries the indication information of the location of the nonzero coefficient at the first spatial layer.

In a possible implementation,

when the rank of the terminal device is equal to 2, and the first indication information is the first combination, the first indication information indicates that the second information carries indication information of locations of nonzero coefficients at the first spatial layer and a second spatial layer;
when the rank of the terminal device is equal to 2, and the first indication information is the second combination, the first indication information indicates that the second information does not carry the indication information of the location of the nonzero coefficient at the first spatial layer, and the second information carries indication information of a location of a nonzero coefficient at the second spatial layer;

when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer; or

when the rank of the terminal device is equal to 2, and the first indication information is the fourth combination, the first indication information indicates that the second information does not carry the indication information of the locations of the nonzero coefficients at the first spatial layer and the second spatial layer.

In a possible implementation,

when the rank of the terminal device is greater than 2, and the first indication information is the first combination, the first indication information indicates that the second information carries indication information of locations of the nonzero coefficients at all the spatial layers;

when the rank of the terminal device is greater than 2, and the first indication information is the second combination, the first indication information indicates that the second information does not carry the indication information of the location of the nonzero coefficient at the first spatial layer, and the second information carries indication information of locations of nonzero coefficients at spatial layers other than the first spatial layer in all the spatial layers;

when the rank of the terminal device is greater than 2, and the first indication information is the third combination, the first indication information indicates that the second information does not carry the indication information of the location of the nonzero coefficient at the second spatial layer, and the second information carries indication information of locations of nonzero coefficients at spatial layers other than the second spatial layer in all the spatial layers; or

when the rank of the terminal device is greater than 2, and the first indication information is the fourth combination, the first indication information indicates that the second information does not carry indication information of a location of a nonzero coefficient at a third spatial layer, and the second information carries indication information of locations of nonzero coefficients at spatial layers other than the third spatial layer in all the spatial layers.

In a possible implementation,

the transceiver is further configured to receive first configuration information from the network apparatus, where the first configuration information is used to configure a set of ranks that are optional for the terminal device;

a processor is configured to select, based on the first configuration information, the rank of the terminal device from the set of ranks that are optional for the terminal device; and

the transceiver is further configured to send the rank indicator RI to the network apparatus, where the RI indicates the rank of the terminal device.

In a possible implementation, the rank of the terminal device is configured by the network apparatus.

According to an eighth aspect, an embodiment of this application provides a communication apparatus. The apparatus includes:

a transceiver, configured to send first information to a network apparatus, where the first information includes a total quantity of nonzero coefficients at all spatial layers of a terminal device and a rank indicator RI, the RI indicates a rank of the terminal device, and a weighting coefficient matrix in a codebook includes the nonzero coefficient.

When the rank of the terminal device is equal to 1, and the total quantity of nonzero coefficients at all the spatial layers of the terminal device included in the first information is equal to $K_1 M_1$, second information sent by the terminal device to the network apparatus does not carry indication information of a location of a nonzero coefficient, where $M_1$ is a quantity of frequency domain bases at a first spatial layer, and $K_1$ is a quantity of channel state information reference signal CSI-RS ports selected by the terminal device.

When the rank of the terminal device is equal to 2, and the total quantity of nonzero coefficients at all the spatial layers of the terminal device included in the first information is equal to $2 * K_1 M_v$, the second information sent by the terminal device to the network apparatus does not carry the indication information of the location of the nonzero coefficient, where $M_v$ is a quantity of frequency domain bases at a $v^{th}$ spatial layer, $K_1$ is the quantity of channel state information reference signal CSI-RS ports selected by the terminal device, and v is a positive integer.

The transceiver is further configured to send the second information to the network apparatus, where the first information and the second information are used to determine channel state information CSI.

In a possible implementation,

the first information and the second information are carried in a same piece of signaling, the same piece of signaling is uplink control information UCI, the first information is a UCI part 1 of the uplink control information, and the second information is a UCI part 2 of the uplink control information.

In a possible implementation,

when the rank of the terminal device is equal to 1, and the total quantity of nonzero coefficients at all the spatial layers of the terminal device included in the first information is less than $K_1 M_1$, the second information sent by the terminal device to the network apparatus carries the indication information of the location of the nonzero coefficient.

In a possible implementation,

when the rank of the terminal device is equal to 2, and the total quantity of nonzero coefficients at all the spatial layers of the terminal device included in the first information is less than 2 * $K_1 M_v$, the second information sent by the terminal device to the network apparatus carries indication information of locations of nonzero coefficients at the first spatial layer and a second spatial layer.

In a possible implementation,

when the rank of the terminal device is greater than 2, the second information sent by the terminal device to the network apparatus carries indication information of a location of a nonzero coefficient at each spatial layer.

According to a ninth aspect, an embodiment of this application provides a communication apparatus. The apparatus includes:

a transceiver, configured to send first information to a network apparatus, where the first information includes a quantity of nonzero coefficients at each spatial layer of a terminal device, and a weighting coefficient matrix in a codebook includes the nonzero coefficient.

The transceiver is further configured to: when the quantity of nonzero coefficients at any spatial layer in the first information is equal to $K_1 M_v$, second information sent to the network apparatus does not carry indication information indicating a location of a nonzero coefficient at the spatial layer, where $M_v$ is a quantity of frequency domain bases at a $v^{th}$ spatial layer, $K_1$ is a quantity of channel state information reference signal CSI-RS ports selected by the terminal device, and v is a positive integer.

The transceiver is further configured to send the second information to the network apparatus, where the first information and the second information are used to determine channel state information CSI.

In a possible implementation,

the first information and the second information are carried in a same piece of signaling, the same piece of signaling is uplink control information UCI, the first information is a UCI part 1 of the uplink control information, and the second information is a UCI part 2 of the uplink control information.

In a possible implementation,

the transceiver is further configured to: when the quantity of nonzero coefficients at any spatial layer in the first information < $K_1 M_v$, the second information sent to the network apparatus carries the indication information of the location of the nonzero coefficient.

According to a tenth aspect, an embodiment of this application provides a communication apparatus. The communication apparatus may implement functions performed by the terminal device and the network apparatus in the methods according to the first aspect and the second aspect. The communication apparatus includes a processor, a memory, a receiver connected to the processor, and a transmitter connected to the processor. The memory is configured to: store program code, and transmit the program code to the processor. The processor is configured to drive, according to instructions in the program code, the receiver and the transmitter to perform the methods according to the first aspect, the second aspect, and the third aspect. The receiver and the transmitter are connected to the processor, to perform operations of the terminal device and the network apparatus in the methods according to the foregoing aspects. Specifically, the transmitter may perform a sending operation, and the receiver may perform a receiving operation. Optionally, the receiver and the transmitter may be a radio frequency circuit, and the radio frequency circuit receives and sends messages through an antenna. Alternatively, the receiver and the transmitter may be a communication interface, the processor is connected to the communication interface through a bus, and the processor receives or sends a message through the communication interface.

According to an eleventh aspect, an embodiment of this application provides a communication apparatus. The communication apparatus may include an entity, for example, a network apparatus or a chip, or the communication apparatus may include an entity, for example, a terminal device or a chip. The communication apparatus includes a processor and a memory. The memory is configured to store instructions. The processor is configured to execute the instructions in the memory, to enable the communication apparatus to perform the method according to any one of the first aspect, the second aspect, or the third aspect.

According to a twelfth aspect, an embodiment of this application provides a computer-readable storage medium storing one or more computer-executable instructions. When the computer-executable instructions are executed by a processor, the processor performs any one of the possible implementations in the first aspect, the second aspect, or the third aspect.

According to a thirteenth aspect, an embodiment of this application provides a computer program product (or referred to as a computer program) storing one or more computer-executable instructions. When the computer-executable instructions are executed by a processor, the processor performs any one of the possible implementations in the first aspect, the second aspect, or the third aspect.

According to a fourteenth aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete component.

According to a fifteenth aspect, this application provides a communication system. The communication system includes the communication apparatus according to the fourth aspect, the fifth aspect, or the sixth aspect.

According to a sixteenth aspect, this application provides a communication system. The communication system includes the communication apparatus according to the seventh aspect, the eighth aspect, or the ninth aspect.

**BRIEF DESCRIPTION OF DRAWINGS**

FIG. 1a is a schematic diagram of an application scenario according to an embodiment of this application;
FIG. 1b is a schematic diagram of another application scenario according to an embodiment of this application;
FIG. 2 is a schematic diagram of a hardware structure of a communication apparatus according to an embodiment of this application;
FIG. 3a is a schematic structural diagram of an R16 codebook;
FIG. 3b is another schematic structural diagram of an R16 codebook;
FIG. 4 is a schematic diagram of combination coefficients of an R16 codebook;
FIG. 5 is a schematic embodiment diagram of an information feedback method according to an embodiment of this application; and
FIG. 6 is a schematic embodiment diagram of a communication apparatus according to an embodiment of this application.

**DESCRIPTION OF EMBODIMENTS**

In the specification, claims, and accompanying drawings of this application, terms such as "first" and "second" are intended to distinguish between similar objects, but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "have" and any other variants thereof are intended to cover the non-exclusive inclusion, so that a process, method, system, product, or device that includes a series of units is not necessarily limited to those units, but may include other units not expressly listed or inherent to the process, method, product, or device.

The following clearly describes technical solutions in embodiments of this application with reference to the accompanying drawings in embodiments of this application. In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or an NR system, and a future 6th generation communication system.

Some of the various communication systems operated by operators may be referred to as operator networks. The operator network may also be referred to as a PLMN network, is a network established and operated by a government or an operator approved by the government to provide a land mobile communication service for the public, and is mainly a public network in which a mobile network operator (mobile network operator, MNO) provides a mobile broadband access service for a user. The operator network or the PLMN network described in embodiments of this application may be a network that meets a requirement of a 3rd generation partnership project (3rd generation partnership project, 3GPP) standard, which is referred to as a 3GPP network. Usually, the 3GPP network is operated by an operator, and includes but is not limited to a 5th generation (5th generation, 5G) mobile communication network (5G network for short), a 4th generation (4th generation, 4G) mobile communication network (4G network for short), or a 3rd generation (3rd generation, 3G) mobile communication technology network (3G network for short). The 3GPP network further includes a future 6G network. For ease of description, the operator network (for example, a mobile network operator (mobile network operator, MNO) network) is used as an example for description in embodiments of this application.

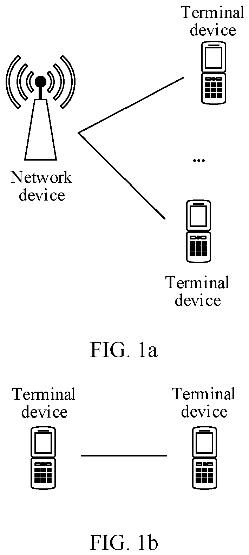

For ease of understanding embodiments of this application, some application scenarios of the solutions are described. FIG. 1a is a schematic diagram of an application scenario according to an embodiment of this application. In an optional implementation, in this embodiment of this application, a transmit end may be a network apparatus, and a receive end may be a terminal device. In another optional implementation, in this embodiment of this application, a transmit end may be a terminal device, and a receive end may be a network apparatus.

FIG. 1b is a schematic diagram of another application scenario according to an embodiment of this application. In another optional implementation, in this embodiment of this application, a transmit end may be a terminal device, and a receive end may be another terminal device that establishes a communication connection to the transmit end.

An implementation of a communication apparatus in embodiments of this application is a terminal device, and the terminal device may also be referred to as user equipment (user equipment, UE). As a device having a wireless transceiver function, the terminal device in embodiments of this application may communicate with one or more core networks (core networks, CNs) through an access network device in a network apparatus. The terminal device may also be referred to as an access terminal, a terminal, a subscriber unit, a subscriber station, a mobile station, a remote station, a remote terminal, a mobile device, a user terminal, a wireless network apparatus, a user agent, a user apparatus, or the like. The terminal device may be deployed on land, where the deployment includes indoor or outdoor, and handheld or vehicle-mounted deployment, may be deployed on water (for example, on a ship), or may be deployed in air (for example, on a plane, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an unmanned aerial vehicle device or an internet of things, a terminal in an internet of vehicles, a terminal in any form in a 5th generation (5th generation, 5G) mobile communication network and a future network, relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). This is not limited in embodiments of this application.

A network apparatus may be considered as a subnet of an operator network, and is an implementation system between a service node and a terminal device in the operator network. To access the operator network, the terminal device is first connected to the network apparatus, and then may be connected to the service node of the operator network through the network apparatus. The network apparatus in embodiments of this application is a device that provides a wireless communication function for the terminal device, and may also be referred to as a (radio) access network ((radio) access network, (R)AN). The network apparatus includes but is not limited to: a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmission reception point, TRP), a transmitting point (transmitting point, TP), a small base station device (pico), a mobile switching center, a network apparatus in a future network, or the like. In systems using different radio access technologies, devices with functions of the access network device may have different names.

An information feedback method provided in this application may be applied to various communication systems, for example, may be an internet of things (internet of things, IoT), a narrowband internet of things (narrowband internet of things, NB-IoT), or a long term evolution (long term evolution, LTE) network; may be a 5th generation (5G) communication system; may be an LTE-5G hybrid architecture; or may be a 5G new radio (new radio, NR) system or a new communication system emerging in future communication development. The 5G communication system in this application may include at least one of a non-standalone (non-standalone, NSA) 5G communication system and a standalone (standalone, SA) 5G communication system. The communication system may alternatively be a public land mobile network (public land mobile network, PLMN), a device-to-device (device-to-device, D2D) network, a machine to machine (machine to machine, M2M) network, or another network.

In addition, embodiments of this application are also applicable to another future-oriented communication technology, for example, 6G. A network architecture and a service scenario described in this application are intended to describe the technical solutions in this application more clearly, and do not constitute a limitation on the technical solutions provided in this application. A person of ordinary skill in the art may know that with evolution of the network architecture and emergence of new service scenarios, the technical solutions provided in this application are also applicable to similar technical problems.

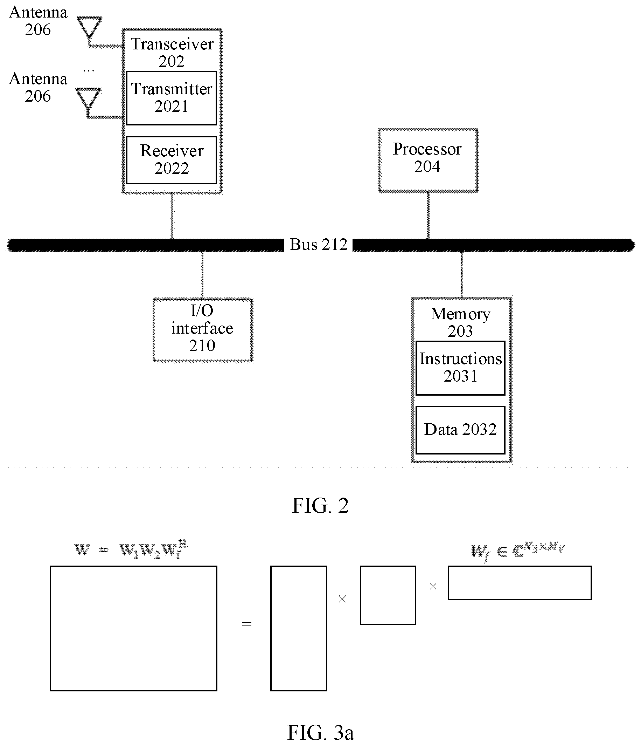

FIG. 2 is a schematic diagram of a hardware structure of a communication apparatus according to an embodiment of this application. A hardware structure of the network apparatus in embodiments of this application is similar to that of the communication apparatus, and a hardware structure of the terminal device in embodiments of this application is similar to that of the communication apparatus. Details are not described herein. In a possible implementation, the communication apparatus may alternatively be implemented by using a chip system. As shown in FIG. 2, the communication apparatus includes at least a processor 204, a memory 203, and a transceiver 202. The memory 203 is further configured to store instructions 2031 and data 2032. Optionally, the communication apparatus may further include antennas 206, an I/O (input/output, Input/Output) interface 210, and a bus 212. The transceiver 202 further includes a transmitter 2021 and a receiver 2022. In addition, the processor 204, the transceiver 202, the memory 203, and the I/O interface 210 are communicatively connected to each other through the bus 212, and the antennas 206 are connected to the transceiver 202.

The processor 204 may be a general-purpose processor, for example, but not limited to, a central processing unit (Central Processing Unit, CPU), or may be a dedicated processor, for example, but not limited to, a digital signal processor (Digital Signal Processor, DSP), an application-specific integrated circuit (Application-Specific Integrated Circuit, ASIC), or a field programmable gate array (Field Programmable Gate Array, FPGA). Alternatively, the processor 204 may be a neural network processing unit (neural processing unit, NPU). In addition, the processor 204 may alternatively be a combination of a plurality of processors. Particularly, in the technical solutions provided in embodiments of this application, the processor 204 may be configured to perform a related step according to the information feedback method in a subsequent method embodiment. The processor 204 may be a processor that is specially designed to perform the foregoing steps and/or operations, or may be a processor that performs the foregoing steps and/or operations by reading and executing the instructions 2031 stored in the memory 203. The processor 204 may need to use the data 2032 in a process of performing the foregoing steps and/or operations.

The transceiver 202 includes the transmitter 2021 and the receiver 2022. In an optional implementation, the transmitter 2021 is configured to send a signal through the antenna 206. The receiver 2022 is configured to receive a signal through at least one of the antennas 206. Particularly, in the technical solutions provided in embodiments of this application, the transmitter 2021 may be specifically configured to perform, through at least one of the antennas 206, for example, an operation performed by a receiving module or a sending module in the network apparatus or the communication apparatus when the information feedback method is applied to the network apparatus or the communication apparatus in a subsequent method embodiment.

In this embodiment of this application, the transceiver 202 is configured to support the communication apparatus in performing the foregoing receiving function and sending function. A processor having a processing function is considered as the processor 204. The receiver 2022 may also be referred to as an input port, a receiving circuit, or the like. The transmitter 2021 may be referred to as a transmission port, a transmitting circuit, or the like.

The processor 204 may be configured to execute the instructions stored in the memory 203, to control the transceiver 202 to receive a message and/or send a message, to complete functions of the communication apparatus in the method embodiments of this application. In an implementation, it may be considered that a function of the transceiver 202 is implemented by using a transceiver circuit or a dedicated transceiver chip. In this embodiment of this application, that the transceiver 202 receives a message may be understood as that the transceiver 202 inputs a message, and that the transceiver 202 sends a message may be understood as that the transceiver 202 outputs a message.

The memory 203 may be various types of storage media, for example, a random access memory (Random Access Memory, RAM), a read-only memory (Read-Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 203 is specifically configured to store the instructions 2031 and the data 2032. The processor 204 may perform the steps and/or the operations in the method embodiments of this application by reading and executing the instructions 2031 stored in the memory 203. The data 2032 may need to be used in a process of performing the operations and/or the steps in the method embodiments of this application.

Optionally, the communication apparatus may further include the I/O interface 210. The I/O interface 210 is configured to: receive instructions and/or data from a peripheral device, and output instructions and/or data to the peripheral device.

For ease of understanding embodiments of this application, several terms used in this application are first briefly described.

1. Channel reciprocity: In a time division duplex (time division duplex, TDD) mode, on uplink and downlink channels, signals are transmitted on a same frequency domain resource and on different time domain resources. Within short time (for example, channel propagation coherence time), it may be considered that the signals on the uplink and downlink channels experience same channel fading. This is reciprocity between the uplink and downlink channels. Based on the reciprocity between the uplink and downlink channels, a network apparatus may measure the uplink channel based on an uplink reference signal, for example, a sounding reference signal (sounding reference signal, SRS). In addition, the downlink channel may be estimated based on the uplink channel, so that a precoding matrix and the like used for downlink transmission can be determined.

However, in a frequency division duplex (frequency division duplex, FDD) mode, because a frequency band interval between uplink and downlink channels is far greater than a coherence bandwidth, and the uplink and downlink channels do not have reciprocity, a precoding matrix determined based on the uplink channel may not adapt to the downlink channel. However, in the FDD mode, the uplink and downlink channels still have partial reciprocity, for example, angle reciprocity and delay reciprocity. Therefore, an angle and a delay may also be referred to as reciprocity parameters.

When transmitted through a radio channel, a signal may arrive at a receive antenna from a transmit antenna along a plurality of paths. Multipath delay spread causes frequency selective fading, that is, a change of a frequency domain channel. A delay is transmission time of a radio signal on a different transmission path, is determined by a distance and a speed, and is irrelevant to a frequency domain of the radio signal. Therefore, delays on the uplink and downlink channels in the FDD mode may be considered to be the same, in other words, reciprocal.

In addition, an angle may be an angle of arrival (angle of arrival, AOA) at which a signal arrives at a receive antenna through a radio channel, or may be an angle of departure (angle of departure, AOD) at which a signal is transmitted through a transmit antenna. In embodiments of this application, the angle may be an angle of arrival at which an uplink signal arrives at the network apparatus, or may be an angle of departure at which the network apparatus transmits a downlink signal. Because of reciprocity of transmission paths of the uplink and downlink channels at different frequencies, an angle of arrival of an uplink reference signal and an angle of departure of a downlink reference signal may be considered to be reciprocal.

Therefore, it may be considered that the delays and the angles on the uplink and downlink channels in the FDD mode have reciprocity. In embodiments of this application, each angle may be represented by an angle vector. Each delay may be represented by a delay vector. Therefore, in embodiments of this application, one angle vector may represent one angle, and one delay vector may represent one delay.

2. Reference signal (reference signal, RS): may also be referred to as a pilot (pilot), a reference sequence, or the like. In embodiments of this application, the reference signal may be a reference signal used for channel measurement. For example, the reference signal may be a channel state information reference signal (channel state information reference signal, CSI-RS), a sounding reference signal (sounding reference signal, SRS), a cell reference signal (cell reference signal, CRS), or a demodulation reference signal (demodulation reference signal, DMRS). It should be understood that the reference signals listed above are merely examples, and should not constitute any limitation on this application. In this application, a possibility of defining another reference signal in a future protocol to implement a same or similar function is not precluded.

The reference signal in embodiments of this application may be referred to as a downlink reference signal, and is a reference signal obtained after a network apparatus precodes a reference signal based on a channel reciprocity parameter. Precoding may specifically include beamforming (beamforming) and/or phase rotation. Beamforming may be implemented, for example, by precoding a reference signal based on one or more angle vectors. Phase rotation may be implemented, for example, by precoding a reference signal based on one or more delay vectors. Precoding a downlink reference signal based on one or more angle vectors may also be referred to as loading the one or more angle vectors to the downlink reference signal. Precoding a downlink reference signal based on one or more delay vectors may also be referred to as loading the one or more delay vectors to the downlink reference signal.

3. FDD downlink channel re-establishment (also referred to as CSI obtaining based on FDD partial reciprocity): A method for re-establishing a downlink channel based on CSI in an FDD system includes the following steps:

Step 1: A network apparatus receives an SRS sent by a terminal device, and estimates, based on the uplink SRS, information (for example, azimuths and delays) having uplink-downlink reciprocity.

Step 2: The network apparatus sends a downlink reference signal to the terminal device. Specifically, the network apparatus loads the obtained information having the uplink-downlink reciprocity to the downlink reference signal, and indicates the terminal device to measure and feed back supplementary information that the network apparatus needs to obtain. Specifically, "loading" means that a group of weights are obtained based on uplink channel information, then the weights are weighted to the downlink reference signal, and a beamformed (beamformed) reference signal is sent.

Step 3: The terminal device performs re-estimation based on the downlink reference signal, and feeds back the supplementary information (for example, may be a full-band complex amplitude corresponding to each port).

Step 4: The network apparatus re-establishes a downlink channel based on the information obtained in step 1 and step 3.

4. Transmission port (transmission port): may be referred to as an antenna port, a transmission port of a downlink reference signal, or a transmission port of a reference signal in this application, or may be referred to as a port or a Tx port for short. The transmission port is configured to send a signal or data. The transmission port is a transmit antenna identified by a receive end device, or a transmit antenna that can be distinguished in space. The port is a logical meaning. One antenna port may be configured for each virtual antenna, each virtual antenna may be a weighted combination of a plurality of physical antennas, and each antenna port may correspond to one reference signal port. The antenna port is configured to carry at least one of a specific physical channel and a specific physical signal. For signals sent through a same antenna port, regardless of whether the signals are sent through a same physical antenna or different physical antennas, channels corresponding to paths through which the signals pass during spatial transmission may be considered to be the same or correlated (for example, large-scale channel properties such as channel matrices H are the same). In other words, when demodulating the signals sent through the same antenna port, a receive end may consider that the channels for the signals are the same or correlated.

5. Channel state information (channel state information, CSI): may include at least one of the following information: a channel quality indicator (channel quality indicator, CQI), a precoding matrix indicator (precoding matrix indicator, PMI), a CSI-RS resource indicator (CSI-RS resource indicator, CRI), a synchronization signal and physical broadcast channel block (SSB) resource indicator (SS/PBCH block resource indicator, SSBRI), a spatial layer indicator (layer indicator, LI), a rank indicator (rank indicator, RI), and reference signal received power (reference signal received power, RSRP). The RSRP may be RSRP (L1-RSRP) of a spatial layer 1. In this application, the channel state information may further include a synchronization measurement result or indication information of the synchronization measurement result.

A rank (rank) of a terminal device may be configured by a network apparatus (or limited by the network apparatus), or may be selected (or determined) by the terminal device from a set of ranks that are optional for the terminal device and that are configured by the network apparatus. Details are separately described below.

In a possible implementation, the terminal device receives first configuration information from the network apparatus, where the first configuration information is used to configure the set of ranks that are optional for the terminal device. The terminal device selects, based on the first configuration information, the rank of the terminal device from the set of ranks that are optional for the terminal device. The terminal device sends a rank indicator RI to the network apparatus, where the RI indicates the rank of the terminal device.

For example, the first configuration information may be a "typeII-RI-Restriction-r17" field. For example, when "typeII-RI-Restriction-r17" is equal to "0011", the first configuration information is used to configure a quantity of ranks in the set of ranks that are optional for the terminal device to be 2, in other words, ranks that are optional for the terminal device are a rank 1 and a rank 2.

For another example, when "typeII-RI-Restriction-r17" is equal to "0111", the first configuration information is used to configure a quantity of ranks in the set of ranks that are optional for the terminal device to be 3, in other words, ranks that are optional for the terminal device are a rank 1, a rank 2, and a rank 3.

For another example, when "typeII-RI-Restriction-r17" is equal to "1111", the first configuration information is used to configure a quantity of ranks in the set of ranks that are optional for the terminal device to be 4, in other words, ranks that are optional for the terminal device are a rank 1, a rank 2, a rank 3, and a rank 4.

In a possible implementation, the first configuration information is carried in a radio resource control (radio resource control, RRC) message.

After receiving the first configuration information, the terminal device selects the rank of the terminal device from the set of ranks that are optional for the terminal device. The rank of the terminal device may be considered as a subset of the set of ranks that are optional for the terminal device. It should be noted that the rank of the terminal device may be a rank supported by the terminal device, or may be a rank selected by the terminal device. This is not limited herein.

After determining the rank of the terminal device, the terminal device reports the rank of the terminal device to the network apparatus by using the RI. A length of the RI is $min(2, \lceil log_2 n_{RI} \rceil)$ (bits), where min(A, B) means taking a smaller value from a value A and a value B, $\lceil \; \rceil$ means rounding up, and $n_{RI}$ is a quantity of RIs that the network apparatus allows the terminal device to report.

For example, when "typeII-RI-Restriction-r17" is equal to "0011", the first configuration information is used to configure a quantity of ranks in the set of ranks that are optional for the terminal device to be 2, in other words, the first configuration information is used to configure ranks that are optional for the terminal device to be a rank 1 and a rank 2. If the RI reported by the terminal device is "0", it indicates that the rank selected (or determined) by the terminal device based on the first configuration information is 1 (in other words, the rank of the terminal device is rank=1).

In another possible implementation, the rank of the terminal device is configured by the network apparatus. The rank of the terminal device is configured (or limited) by the network apparatus. For example, when the network apparatus configures the rank of the terminal device to be 2, the rank of the terminal device is 2.

The rank of the terminal device is equal to a quantity of spatial layers of the terminal device. For example, when the rank of the terminal device is 1, the quantity of spatial layers of the terminal device is 1, and the terminal device supports a first spatial layer (a spatial layer 1, or referred to as a layer 1); when the rank of the terminal device is 2, the quantity of spatial layers of the terminal device is 2, and the terminal device supports a first spatial layer (a spatial layer 1, or referred to as a layer 1) and a second spatial layer (a spatial layer 2, or referred to as a layer 2). The rest may be deduced by analogy.

6. Codebook:

The R16 version for an NR system defines a space-frequency dual-domain compression codebook. PMIs of all subbands are compressed in frequency domain, and a structure of the codebook is:

$$W = W_1 W_2 W_f^H.$$

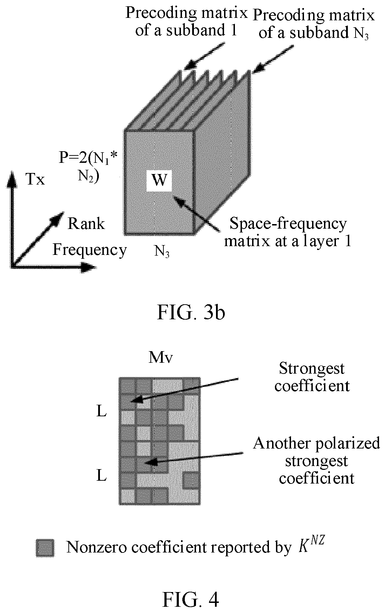

W is the codebook, $W_1 \in \mathbb{N}^{(2N_1 N_2) \times 2L}$ is a port selection matrix, $W_2 \in \mathbb{C}^{2L \times M_V}$ is a combination coefficient matrix, $W_f \in \mathbb{C}^{N_3 \times M_V}$ is a frequency domain basis matrix, $N_1$ and $N_2$ are respectively a quantity of horizontal antenna ports and a quantity of vertical antenna ports of a network apparatus, 2L is a quantity of channel state information reference signal CSI-RS ports selected by a terminal device, and $M_V$ is a quantity of frequency domain bases. Specifically, as shown in FIG. 3a and FIG. 3b, FIG. 3a is a schematic structural diagram of an R16 codebook, and FIG. 3b is another schematic structural diagram of an R16 codebook. $N_1$ and $N_2$ respectively represent a quantity of horizontal antenna ports and a quantity of vertical antenna ports, and $N_3$ is a quantity of frequency domain subbands (or a quantity of rows of a frequency domain compression matrix $W_f$).

A combination coefficient in the combination coefficient matrix is also referred to as a weighting coefficient or a nonzero coefficient.

FIG. 4 is a schematic diagram of combination coefficients of an R16 codebook. In the R16 codebook, $W_2$ is a quantized combination coefficient (also referred to as a weighting coefficient) matrix. It is assumed that an unquantized combination coefficient is $c_{l,m}$, and a rank 1 codebook is used as an example. In this case, a specific quantization rule is as follows:

A coefficient with maximum energy in coefficients corresponding to a CSI-RS port (port) is referred to as a strongest coefficient (strongest coefficient), in other words, the "strongest coefficient" is for a nonzero coefficient. First, global strongest coefficients are normalized to 1, where "global" refers to port coefficients of all CSI-RS ports.

Further, a codebook to which the quantization rule is applicable is $W = W_1 W_2 W_f^H$, where $W_1 \in \mathbb{N}^{P \times K_1}$, $W_2 \in \mathbb{C}^{K_1 \times M_V}$, and $W_f \in \mathbb{C}^{N_3 \times M_V}$.

$W_1$ is a free selection matrix, and a special configuration of $W_1$ is a unit matrix. $W_1$ is also referred to as a port selection matrix, so that $K_1$ ports are freely selected from P CSI-RS ports, or $K_1/2$ ports are freely selected from P/2 CSI-RS ports. It should be noted that P is a positive integer, P/2 is a positive integer, $K_1$ is a positive integer, and P is a quantity of CSI-RS ports used for port selection.

It should be noted that in embodiments of this application, $K_1$ may be equal to 2L, and P=($2N_1 N_2$).

$W_2$ is a weighting coefficient corresponding to the P CSI-RS ports, and the weighting coefficient is a quantized value obtained by quantizing coefficients of the P CSI-RS ports according to the quantization rule. $W_f^H$ is a DFT compression matrix, where $N_3 = N_{CQISubband} * R$, and $M_V \geq 1$. R is defined as a quantity of precoding matrix indicator (Precoding Matrix Indicator, PMI) subbands included in each CQI subband. A network apparatus may disable $W_f^H$. When being disabled, $W_f^H$ is an all-1 vector (all-one vector).

In a possible implementation, a codebook to which the quantization rule is applicable is $W = W_1 W_2 W_f^H$, where $W_1 \in \mathbb{N}^{P \times K_1}$, $W_2 \in \mathbb{C}^{K_1 \times M_V}$, and $W_f \in \mathbb{C}^{N_3 \times M_V}$. $W_1 \in \mathbb{N}^{P \times K_1}$ is a CSI-RS port free selection matrix, and is also referred to as a port selection matrix, so that $K_1$ ports are freely selected from P CSI-RS ports, or $K_1/2$ ports are freely selected from P/2 CSI-RS ports. A special configuration of $W_1$ is a unit matrix. It should be noted that P is a positive integer, P/2 is a positive integer, $K_1$ is a positive integer, and P is a quantity of CSI-RS ports used for port selection. For example, P may be 4, 8, 16, 32, or the like. Alternatively, in consideration of factors such as calculation complexity of a terminal, P is jointly designed with a value of $M_V$. For example, $P \times M_V \le P_0$, where $P_0$ is an integer value restricted in a protocol, or a value that may be configured for (P, $M_V$) according to the protocol.

For example, a quantity of nonzero coefficients corresponding to a CSI-RS port at an $l^{th}$ spatial layer is assumed as $K_l^{NZ}$, where the nonzero coefficient is a nonzero coefficient to be fed back. $K_l^{NZ} \le K_0$, where $M_V$ is a quantity of frequency domain bases (or referred to as a quantity of columns of a frequency domain compression matrix), v is an index of a spatial layer of the terminal device, and a maximum value of v is a maximum quantity of spatial layers of the terminal device. A total quantity of nonzero coefficients corresponding to CSI-RS ports at all spatial layers (namely, v spatial layers) is $K^{NZ}$, where $K^{NZ} = \sum_{l=1}^{v} K_l^{NZ}$.

For example, $K^{NZ}$ is less than or equal to C*$K_0$. $K_0$ is a value agreed on by the terminal device and the network apparatus or predefined in the protocol, and is used to control a quantity of coefficients to be fed back. C is an integer greater than or equal to 1.

Currently, the protocol specifies that C is a positive integer less than or equal to 2, in other words, $K^{NZ} \le 2K_0$. In embodiments of this application, $K^{NZ} \le 2K_0$ is used as an example for description. It may be understood that, with evolution of the protocol, C may be another positive integer, for example, 3, 4, or 5. This is not limited in embodiments of this application.

It may be understood that $M_V$ is the quantity of frequency domain bases, and $M_V$ may be different or may be the same for different spatial layers (in other words, when v has different values). This is not limited herein.

For $K_0$, $K_0 = \lceil \beta K_1 M_v \rceil$. $M_v$ is the quantity of frequency domain bases at a $v^{th}$ spatial layer, $K_1$ is a quantity of channel state information reference signal CSI-RS ports selected by the terminal device, and $\beta$ is a proportion value. $K_0$ may be configured by the network apparatus. In other words, a total quantity of nonzero coefficients reported by the terminal device is configured by the network apparatus.

Currently, the R16 version specification specifies that $\beta$ is less than 1. $\beta$ is defined as follows: a ratio of the total quantity of nonzero coefficients reported by the terminal device to a quantity of nonzero coefficients that the network apparatus allows the terminal device to report.

Further, $\beta$ is defined as follows: a ratio of the total quantity of nonzero coefficients reported by the terminal device to a maximum quantity of nonzero coefficients that the network apparatus allows the terminal device to report, that is,

$$\beta = \frac{\text{the total quantity of nonzero coefficients reported by the terminal device}}{\text{the maximum quantity of nonzero coefficients that the network apparatus allows the terminal device to report}}.$$

It should be noted that different spatial layers may use same or different $\beta$. For example, $\beta$ of a spatial layer 1 is $\beta 1$, and $\beta$ of a spatial layer 2 is $\beta 2$. For another example, the spatial layer 1 and the spatial layer 2 use same $\beta$. However, in embodiments of this application, when different spatial layers use different $\beta$, $\beta=1$. For example, $\beta 1=\beta 2=1$.

7. Uplink control information (uplink control information, UCI):

After completing channel measurement, a terminal device needs to report measurement information to a network apparatus by using the uplink control information (uplink control information, UCI). Currently, an R16 codebook is used as an example, and it is specified that the UCI includes two parts: a UCI part 1 and a UCI part 2. The UCI part 1 includes a total quantity of nonzero coefficients at all spatial layers, and the UCI part 2 includes indication information indicating a location of a nonzero coefficient at each spatial layer.

Currently, the UCI is defined in a protocol as follows: For Type I, Type II and Enhanced Type II CSI feedbacks sent on PUSCHs, a CSI report includes two parts. A part 1 has a fixed payload size and is used to identify a quantity of information bits in a part 2. The part 1 needs to be sent in its entirety before the part 2. ("For Type I, Type II and Enhanced Type II CSI feedback on PUSCH, a CSI report comprises of two parts. Part 1 has a fixed payload size and is used to identify the number of information bits in Part 2. Part 1 shall be transmitted in its entirety before Part 2".)

Specifically, the UCI part 1 may include one or more of the following information: $K^{NZ}$, an RI, a CQI, or the like.

The UCI part 2 may include one or more of the following information: indication information of a location of a nonzero coefficient (for example, a bitmap (bitmap)), a strongest coefficient indicator (strongest coefficient indicator, SCI), or CSI-RS port selection indication information, including but not limited to: an FD basis subset selection indicator (FD basis subset selection indicator), a weighting coefficient (also referred to as a combination coefficient, a nonzero coefficient, or an LC coefficient), an SD basis subset selection indicator (SD basis subset selection indicator), an SD oversampling factor (oversampling factor), or the like.

8. Spatial layer (layer):

The spatial layer may be referred to as a stream (stream) or a layer. Each data stream independently sent in MIMO is also referred to as each spatial layer.

With evolution of a protocol, a quantity of nonzero coefficients reported by a terminal device may be equal to a quantity of nonzero coefficients (namely, a maximum quantity of nonzero coefficients) that a network apparatus allows the terminal device to report, that is, $\beta=1$. In other words, the terminal device may report all nonzero coefficients (weighting coefficients) in a weighting coefficient matrix by using UCI. In this case, the network apparatus may determine a location of each nonzero coefficient based on all the nonzero coefficients reported by the terminal device. Therefore, in the UCI, the terminal device may not report indication information of the location of the nonzero coefficient to the network apparatus. Based on this, embodiments of this application provide an information feedback method, to reduce, while ensuring correct data transmission, a coding bit rate of UCI sent by a terminal device to a network apparatus.

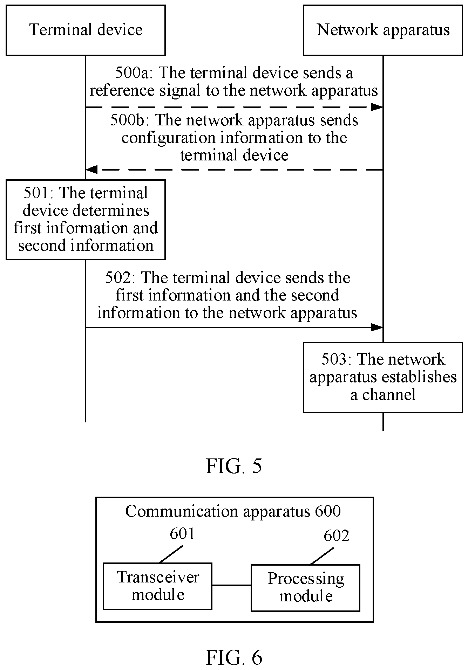

The following describes embodiments of this application with reference to the accompanying drawings. In embodiments of this application, four cases are used as examples for description. The four cases are cases in which the network apparatus indicates that a rank (rank) supported by the terminal device is equal to 1, rank=2, rank=3, and rank=4. It may be understood that the technical solutions provided in this application may be further applied to a scenario in which the network apparatus indicates that the rank supported by the terminal device is greater than 4. This is not limited herein. FIG. 5 is a schematic embodiment diagram of an information feedback method according to an embodiment of this application. The information feedback method provided in this embodiment of this application includes the following steps:

500a: A terminal device sends a reference signal to a network apparatus.

In this embodiment, the terminal device sends the reference signal to the network apparatus. The uplink reference signal may be a sounding reference signal (sounding reference signal, SRS), or may be a demodulation reference signal (demodulation reference signal, DMRS), or may be a newly defined reference signal. This is not limited herein.

It should be noted that the reference signal may also be referred to as a pilot, and is not distinguished in this embodiment of this application.

It should be noted that step 500a is an optional step.

500b: The network apparatus sends configuration information to the terminal device.

In this embodiment, a nonzero coefficient is also referred to as a weighting coefficient, a combination coefficient, a weighting coefficient corresponding to an angle-delay pair (angle-delay pair), or the like. This is not limited herein.

The configuration information is used to configure a value of $\beta$, in other words, the configuration information includes $\beta$, where $\beta=1$. $\beta$ is equal to 1, to be specific, a ratio of a total quantity of nonzero coefficients reported by the terminal device to a maximum quantity of nonzero coefficients that the network apparatus allows the terminal device to report is 1. The value of $\beta$ may be configured by the network apparatus to the terminal device by using the configuration information (for example, RRC signaling).

The configuration information further includes first configuration information, where the first configuration information is used to configure a set of ranks that are optional for the terminal device. The terminal device selects, based on the first configuration information, a rank of the terminal device from the set of ranks that are optional for the terminal device. The terminal device sends a rank indicator RI to the network apparatus, where the RI indicates the rank of the terminal device.

For example, the first configuration information may be a "typeII-RI-Restriction-r17" field. For example, when "typeII-RI-Restriction-r17" is equal to "0011", the first configuration information is used to configure a quantity of ranks in the set of ranks that are optional for the terminal device to be 2, in other words, ranks that are optional for the terminal device are a rank 1 and a rank 2.

For another example, when "typeII-RI-Restriction-r17" is equal to "0111", the first configuration information is used to configure a quantity of ranks in the set of ranks that are optional for the terminal device to be 3, in other words, ranks that are optional for the terminal device are a rank 1, a rank 2, and a rank 3.

For another example, when "typeII-RI-Restriction-r17" is equal to "1111", the first configuration information is used to configure a quantity of ranks in the set of ranks that are optional for the terminal device to be 4, in other words, ranks that are optional for the terminal device are a rank 1, a rank 2, a rank 3, and a rank 4.

In a possible implementation, the first configuration information is carried in a radio resource control (radio resource control, RRC) message.

After receiving the first configuration information, the terminal device selects the rank of the terminal device from the set of ranks that are optional for the terminal device. The rank of the terminal device may be considered as a subset of the set of ranks that are optional for the terminal device. It should be noted that the rank of the terminal device may be a rank supported by the terminal device, or may be a rank selected by the terminal device. This is not limited herein.

After determining the rank of the terminal device, the terminal device reports the rank of the terminal device to the network apparatus by using the RI. A length of the RI is $min(2, \lceil log_2 n_{RI} \rceil)$ (bits), where min(A, B) means taking a smaller value from a value A and a value B, $\lceil \ \rceil$ means rounding up, and $n_{RI}$ is a quantity of RIs that the network apparatus allows the terminal device to report.

For example, when "typeII-RI-Restriction-r17" is equal to "0011", the first configuration information is used to configure a quantity of ranks in the set of ranks that are optional for the terminal device to be 2, in other words, the first configuration information is used to configure ranks that are optional for the terminal device to be a rank 1 and a rank 2. If the RI reported by the terminal device is "0", it indicates that the rank selected (or determined) by the terminal device based on the first configuration information is 1 (in other words, the rank of the terminal device is rank=1).

It should be noted that step 500b is an optional step. When step 500b is not performed, the value of β may alternatively be specified in a protocol, or may be agreed on by the terminal device and the network apparatus in advance. This is not limited herein.

501: The terminal device determines first information and second information.

In this embodiment, the terminal device first determines the first information and the second information.

For the first information, the first information includes a total quantity of nonzero coefficients at all spatial layers of the terminal device, and the nonzero coefficients are used to constitute a weighting coefficient matrix in a codebook. The first information further includes first indication information, and the first indication information indicates whether the second information sent by the terminal device to the network apparatus carries indication information of a location of a nonzero coefficient. For example, the indication information of the location of the nonzero coefficient may be a bitmap of nonzero coefficients at each spatial layer "Bitmaps per layer for the nonzero coefficients" in a UCI part 2.

When the first information includes the first indication information, the first information includes one or more of the following information: the total quantity ($K^{NZ}$) of nonzero coefficients at all the spatial layers of the terminal device, the RI, a CQI, or the first indication information.

For the second information, when the first indication information indicates that the second information does not carry the indication information of the location of the nonzero coefficient, the second information may include one or more of the following information: a strongest coefficient indicator (strongest coefficient indicator, SCI), or CSI-RS port selection indication information, including but not limited to: an FD basis subset selection indicator (FD basis subset selection indicator), an LC coefficient, an SD basis subset selection indicator (SD basis subset selection indicator), an SD oversampling factor (oversampling factor), or the like.

When the first indication information indicates that the second information carries the indication information of the location of the nonzero coefficient, the second information may include: the indication information of the location of the nonzero coefficient (for example, a bitmap (bitmap)), a strongest coefficient indicator (strongest coefficient indicator, SCI), or CSI-RS port selection indication information, including but not limited to: an FD basis subset selection indicator (FD basis subset selection indicator), an LC coefficient, an SD basis subset selection indicator (SD basis subset selection indicator), an SD oversampling factor (oversampling factor), or the like.

There may be a plurality of implementation solutions for the first indication information. Details are separately described below.

    (1) The first indication information includes N bits, where N is an integer greater than or equal to 1, and N is equal to the rank of the terminal device.

Each bit in the first indication information corresponds to a nonzero coefficient at each spatial layer, and a bit in the first indication information indicates whether the second information carries indication information of a location of a nonzero coefficient at a spatial layer corresponding to the bit.

Specifically, when the rank of the terminal device is 1, the first indication information includes one bit. For example, when the bit is "0", it indicates that the second information does not carry indication information of a location of a nonzero coefficient at a spatial layer (namely, a spatial layer 1) corresponding to the bit; when the bit is "1", it indicates that the second information carries the indication information of the location of the nonzero coefficient at the spatial layer (namely, the spatial layer 1) corresponding to the bit. For example, when the bit is "1", it indicates that the second information does not carry indication information of a location of a nonzero coefficient at a spatial layer (namely, a spatial layer 1) corresponding to the bit; when the bit is "0", it indicates that the second information carries the indication information of the location of the nonzero coefficient at the spatial layer (namely, the spatial layer 1) corresponding to the bit.

Specifically, when the rank of the terminal device is 2, the first indication information includes two bits. For example, when the first bit is "0", it indicates that the second information does not carry indication information of a location of a nonzero coefficient at a spatial layer (for example, a spatial layer 1) corresponding to the first bit; when the first bit is "1", it indicates that the second information carries the indication information of the location of the nonzero coefficient at the spatial layer (namely, the spatial layer 1) corresponding to the first bit. When the second bit is "0", it indicates that the second information does not carry indication information of a location of a nonzero coefficient at a spatial layer (for example, a spatial layer 2) corresponding to the second bit; when the second bit is "1", it indicates that the second information carries the indication information of the location of the nonzero coefficient at the spatial layer (namely, the spatial layer 2) corresponding to the second bit.

It may be understood that, in the first indication information, the second bit may alternatively indicate a first spatial layer, and the first bit may alternatively indicate a second spatial layer (opposite to the solution described in the previous paragraph). This is not limited herein.

Specifically, when the rank of the terminal device is 3, the first indication information includes three bits. For example, when the first bit is "0", it indicates that the second information does not carry indication information of a location of a nonzero coefficient at a spatial layer (for example, a spatial layer 1) corresponding to the first bit; when the first bit is "1", it indicates that the second information carries the indication information of the location of the nonzero coefficient at the spatial layer (namely, the spatial layer 1) corresponding to the first bit. When the second bit is "0", it indicates that the second information does not carry indication information of a location of a nonzero coefficient at a spatial layer (for example, a spatial layer 2) corresponding to the second bit; when the second bit is "1", it indicates that the second information carries the indication information of the location of the nonzero coefficient at the spatial layer (namely, the spatial layer 1) corresponding to the second bit. When the third bit is "0", it indicates that the second information does not carry indication information of a location of a nonzero coefficient at a spatial layer (for example, a spatial layer 3) corresponding to the third bit; when the third bit is "1", it indicates that the second information carries the indication information of the location of the nonzero coefficient at the spatial layer (namely, the spatial layer 3) corresponding to the third bit.

When the rank of the terminal device is 4, the first indication information is similar to that in the foregoing solutions, and details are not described herein.

In another possible implementation, the first indication information may include only one bit. The bit indicates whether the second information carries indication information of a location of a nonzero coefficient at a first spatial layer. For example, when the bit is "0", it indicates that the second information does not carry the indication information of the location of the nonzero coefficient at the first spatial layer; when the bit is "1", it indicates that the second information carries the indication information of the location of the nonzero coefficient at the first spatial layer.

In another possible implementation, the terminal device and the network apparatus may agree on whether a spatial layer indicated by one bit is a first spatial layer or a second spatial layer, or the protocol may predefine whether the bit indicates the first spatial layer or the second spatial layer. For example, the bit indicates the first spatial layer. When the bit is "0", it indicates that the second information does not carry indication information of a location of a nonzero coefficient at the first spatial layer; when the bit is "1", it indicates that the second information carries the indication information of the location of the nonzero coefficient at the first spatial layer. In this case, the second information carries indication information of a location of a nonzero coefficient at the second spatial layer by default.

In another possible implementation, when the rank of the terminal device is 1, the first information may alternatively not include the first indication information, and the network apparatus determines, based on $K^{NZ}$ included in the first information, whether the second information from the terminal device carries the indication information of the location of the nonzero coefficient. Specifically, when $K^{NZ} = K_1 M_1$, the second information does not carry the indication information of the location of the nonzero coefficient. $M_1$ is a quantity of frequency domain bases at the first spatial layer, and $K_1$ is a quantity of channel state information reference signal CSI-RS ports selected by the terminal device. In another possible implementation, when the rank of the terminal device is 2, the first information may alternatively not include the first indication information, and the network apparatus determines, based on $K^{NZ}$ included in the first information, whether the second information from the terminal device carries the indication information of the location of the nonzero coefficient. Specifically, when $K^{NZ} = 2 * K_1 M_v$, the second information does not carry the indication information of the location of the nonzero coefficient. $M_v$ is a quantity of frequency domain bases at a $v^{th}$ spatial layer, $K_1$ is a quantity of channel state information reference signal CSI-RS ports selected by the terminal device, and v is a positive integer.

(2) The first indication information is indicated by using a combination of bits. When the rank of the terminal device is greater than a quantity of bits included in the first indication information, a combination of a plurality of bits may be used to jointly indicate whether the second information carries indication information of a location of a nonzero coefficient at each spatial layer.

(2.1) A solution in which $K^{NZ}$ is less than or equal to $C*K_1M_V$ is first described, in other words, C may be greater than or equal to 2, and $Q = \sum_{i=1}^{C-1} C_{rank}^i + 1$ , where rank is the rank of the terminal device, and Q is a quantity of combinations of a plurality of bits.

In this case, it can be learned according to the foregoing formula that a quantity of bits required by the first indication information is X, where $X = \lceil log_2(Q) \rceil$ .

(2.2) Then, a solution in which $K^{NZ} \le 2 * K_1M_V$ is described, in other words, C=2. The first indication information includes two bits. The first indication information implements four combinations by using the two bits, where the four combinations include a first combination, a second combination, a third combination, and a fourth combination. The first indication information jointly indicates, by using the four combinations and the rank of the terminal device, whether the second information carries the indication information of the location of the nonzero coefficient at each spatial layer.

The following separately describes solutions in which the network apparatus indicates that the rank supported by the terminal device is 1 (rank=1), the rank of the terminal device is 2 (rank=2), the rank of the terminal device is 3 (rank=3), and the rank of the terminal device is 4 (rank=4).

When rank=1, the first indication information may include one bit, or the first indication information may include two bits. The solution in which the first indication information includes one bit is similar to the foregoing solutions, and details are not described herein. The first information may alternatively not include the first indication information. This solution is similar to the foregoing solutions, and details are not described herein.

The following describes the solution in which the first indication information includes two bits.

For example, when the rank of the terminal device is equal to 1, and the first indication information is the first combination, the first indication information indicates that the second information does not carry indication information of a location of a nonzero coefficient at a first spatial layer; or when the rank of the terminal device is equal to 1, and the first indication information is the second combination, the third combination, or the fourth combination, the first indication information indicates that the second information carries the indication information of the location of the nonzero coefficient at the first spatial layer. For example, details are shown in Table 1.

**Table 1**

| Combination of bits in the first indication information | Spatial layer corresponding to indication information that does not carry a location of a nonzero coefficient in the second information |
|---|---|
| First combination (00) | First spatial layer |
| Second combination (01) | - (the second information carries indication information of location information of the nonzero coefficient at the first spatial layer) |
| Third combination (10) | - (the second information carries the indication information of the location information of the nonzero coefficient at the first spatial layer) |
| Combination of bits in the first indication information | Spatial layer corresponding to indication information that does not carry a location of a nonzero coefficient in the second information |
| Fourth combination (11) | - (the second information carries the indication information of the location information of the nonzero coefficient at the first spatial layer) |

In another example, when the rank of the terminal device is equal to 1, and the first indication information is the first combination or the second combination, the first indication information indicates that the second information does not carry indication information of a location of a nonzero coefficient at a first spatial layer; when the rank of the terminal device is equal to 1, and the first indication information is the third combination or the fourth combination, the first indication information indicates that the second information carries the indication information of the location of the nonzero coefficient at the first spatial layer. For example, details are shown in Table 2.

**Table 2**

| Combination of bits in the first indication information | Spatial layer corresponding to indication information that does not carry a location of a nonzero coefficient in the second information |
|---|---|
| First combination (00) | First spatial layer |

(continued)

| Second combination (01) | First spatial layer |
|---|---|
| Third combination (10) | - (the second information carries indication information of location information of the nonzero coefficient at the first spatial layer) |
| Fourth combination (11) | - (the second information carries the indication information of the location information of the nonzero coefficient at the first spatial layer) |

When rank=2 and $K^{NZ} = 2 * K_1 M_v$, in a possible implementation solution, because the terminal device may completely report nonzero coefficients of the weighting coefficient matrix to the network apparatus, the second information may not carry indication information of locations of nonzero coefficients at a first spatial layer and a second spatial layer. In this case, the first information does not include the first indication information. Alternatively, the first indication information is one bit, and the bit indicates that the second information does not carry the indication information of the locations of the nonzero coefficients at the first spatial layer and the second spatial layer. Alternatively, the first indication information includes two bits, and a combination of the two bits indicates that the second information does not carry the indication information of the locations of the nonzero coefficients at the first spatial layer and the second spatial layer.

When rank=2 and $K^{NZ} < 2 * K_1 M_v$, in another possible implementation solution, the first indication information may include only one bit, and the bit indicates whether the second information carries indication information of a location of a nonzero coefficient at a first spatial layer. When the bit is "1", the second information carries the indication information of the location of the nonzero coefficient at the first spatial layer. When the bit is "0", the second information does not carry the indication information of the location of the nonzero coefficient at the first spatial layer.

When rank=2 and $K^{NZ} = 2 * K_1 M_v$, in another possible implementation solution, when the rank of the terminal device is equal to 2, and the first indication information is the first combination, the first indication information indicates that the second information carries the indication information of the locations of the nonzero coefficients at the first spatial layer and the second spatial layer; when the rank of the terminal device is equal to 2, and the first indication information is the second combination, the first indication information indicates that the second information does not carry indication information of a location of a nonzero coefficient at the first spatial layer, and the second information carries indication information of a location of a nonzero coefficient at the second spatial layer; when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer; or when the rank of the terminal device is equal to 2, and the first indication information is the fourth combination, the first indication information indicates that the second information does not carry the indication information of the locations of the nonzero coefficients at the first spatial layer and the second spatial layer. For example, details are shown in Table 3.

**Table 3**

| Combination of bits in the first indication information | Spatial layer corresponding to indication information that does not carry a location of a nonzero coefficient in the second information |
|---|---|
| First combination (00) | - (the second information carries indication information of location information of the nonzero coefficients at the first spatial layer and the second spatial layer) |
| Second combination (01) | First spatial layer |
| Third combination (10) | Second spatial layer |
| Fourth combination (11) | First spatial layer and second spatial layer |

When rank=2 and $K^{NZ} < 2 * K_1 M_v$, the first indication information includes two bits. Because the terminal device cannot completely report nonzero coefficients of the weighting coefficient matrix at all the spatial layers to the network apparatus, the second information needs to carry indication information of a location of a nonzero coefficient at a first spatial layer or a second spatial layer.

In a possible implementation solution, when the rank of the terminal device is equal to 2, and the first indication information is the first combination, the first indication information indicates that the second information carries indication information of locations of nonzero coefficients at the first spatial layer and the second spatial layer; when the rank of the terminal device is equal to 2, and the first indication information is the second combination, the first indication information indicates that the second information does not carry indication information of a location of a nonzero coefficient at the first spatial layer, and the second information carries indication information of a location of a nonzero coefficient at the second spatial layer; when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer. For example, details are shown in Table 4.

**Table 4**

| Combination of bits in the first indication information | Spatial layer corresponding to indication information that does not carry a location of a nonzero coefficient in the second information |
|---|---|
| First combination (00) | - (the second information carries indication information of location information of the nonzero coefficients at the first spatial layer and the second spatial layer) |
| Second combination (01) | First spatial layer |
| Third combination (10) | Second spatial layer |

In a case in which the rank is greater than 2 (where the rank is a positive integer), for example, the rank is equal to 3, 4, 5, or a larger value: when the rank of the terminal device is greater than 2, and the first indication information is the first combination, the first indication information indicates that the second information carries indication information of locations of the nonzero coefficients at all the spatial layers; when the rank of the terminal device is greater than 2, and the first indication information is the second combination, the first indication information indicates that the second information does not carry indication information of a location of a nonzero coefficient at a first spatial layer, and the second information carries indication information of locations of nonzero coefficients at other spatial layers (for example, a second spatial layer, a third spatial layer, a fourth spatial layer, and a fifth spatial layer); when the rank of the terminal device is greater than 2, and the first indication information is the third combination, the first indication information indicates that the second information does not carry indication information of a location of a nonzero coefficient at the second spatial layer, and the second information carries indication information of locations of nonzero coefficients at other spatial layers (for example, the first spatial layer, the third spatial layer, the fourth spatial layer, and the fifth spatial layer); when the rank of the terminal device is greater than 2, and the first indication information is the fourth combination, the first indication information indicates that the second information does not carry indication information of a location of a nonzero coefficient at the third spatial layer, and the second information carries indication information of locations of nonzero coefficients at other spatial layers (for example, the first spatial layer, the second spatial layer, the fourth spatial layer, and the fifth spatial layer).

For example, in a case in which rank=3, when the rank of the terminal device is equal to 3, and the first indication information is the first combination, the first indication information indicates that the second information carries indication information of locations of nonzero coefficients at a first spatial layer, a second spatial layer, and a third spatial layer; when the rank of the terminal device is equal to 3, and the first indication information is the second combination, the first indication information indicates that the second information does not carry indication information of a location of a nonzero coefficient at the first spatial layer, and the second information carries indication information of locations of nonzero coefficients at the second spatial layer and the third spatial layer; when the rank of the terminal device is equal to 3, and the first indication information is the third combination, the first indication information indicates that the second information does not carry indication information of a location of a nonzero coefficient at the second spatial layer, and the second information carries indication information of locations of nonzero coefficients at the first spatial layer and the third spatial layer; when the rank of the terminal device is equal to 3, and the first indication information is the fourth combination, the first indication information indicates that the second information does not carry indication information of a location of a nonzero coefficient at the third spatial layer, and the second information carries indication information of locations of nonzero coefficients at the first spatial layer and the second spatial layer. For example, details are shown in Table 5.

**Table 5**

| Combination of bits in the first indication information | Spatial layer corresponding to indication information that does not carry a location of a nonzero coefficient in the second information |
|---|---|
| First combination (00) | - (the second information carries indication information of location information of the nonzero coefficients at the first spatial layer, the second spatial layer, and the third spatial layer) |
| Second combination (01) | First spatial layer |

(continued)

| Third combination (10) | Second spatial layer |
|---|---|
| Fourth combination (11) | Third spatial layer |

In another example, when rank=4, in other words, when the rank of the terminal device is equal to 4, if the first indication information includes two bits, the terminal device and the network apparatus need to agree on that indication information of a location of a nonzero coefficient at a specific spatial layer cannot be omitted. In other words, the second information needs to carry the indication information of the location of the nonzero coefficient at the specific spatial layer. The following uses an example in which the second information needs to carry indication information of a location of a nonzero coefficient at a fourth spatial layer for description. The first indication information indicates that the second information carries indication information of locations of nonzero coefficients at a first spatial layer, a second spatial layer, a third spatial layer, and the fourth spatial layer.

When the first indication information is the second combination, the first indication information indicates that the second information does not carry indication information of a location of a nonzero coefficient at the first spatial layer, and the second information carries indication information of locations of nonzero coefficients at the second spatial layer, the third spatial layer, and the fourth spatial layer.

When the first indication information is the third combination, the first indication information indicates that the second information does not carry indication information of a location of a nonzero coefficient at the second spatial layer, and the second information carries indication information of locations of nonzero coefficients at the first spatial layer, the third spatial layer, and the fourth spatial layer.

When the first indication information is the fourth combination, the first indication information indicates that the second information does not carry indication information of a location of a nonzero coefficient at the third spatial layer, and the second information carries indication information of locations of nonzero coefficients at the first spatial layer, the second spatial layer, and the fourth spatial layer.

For example, details are shown in Table 6.

**Table 6**

| Combination of bits in the first indication information | Spatial layer corresponding to indication information that does not carry a location of a nonzero coefficient in the second information |
|---|---|
| First combination (00) | - (the second information carries indication information of location information of the nonzero coefficients at the first spatial layer, the second spatial layer, the third spatial layer, and the fourth spatial layer) |
| Second combination (01) | First spatial layer |
| Third combination (10) | Second spatial layer |
| Fourth combination (11) | Third spatial layer |

When rank=4, in other words, when the rank of the terminal device is equal to 4, the first indication information may alternatively include three bits, and a combination of the three bits jointly indicates whether the second information carries the indication information of the location of the nonzero coefficient at each spatial layer. A specific method is similar to the foregoing method, and details are not described herein.

It may be understood that, for the four combinations implemented by using the two bits in the first indication information, there is another solution for indicating whether the second information carries the indication information of the location of the nonzero coefficient at the first spatial layer (the second spatial layer, the third spatial layer, and/or the fourth spatial layer). Details are not described herein.

It may be understood that that the first combination is (00), the second combination is (01), the third combination is (10), and the fourth combination is (11) is merely an example for description. The first combination may alternatively be (10), or the first combination may alternatively be (01), or the first combination may alternatively be (11). This is not limited herein.

(3) When $K^{NZ} \leq 2 * K_1 M_v$, the first indication information indicates, by using one bit, whether the second information carries indication information of a location of a nonzero coefficient at a specific spatial layer. Because a probability of omitting indication information of a location of a nonzero coefficient at a high spatial layer (for example, a second spatial layer, a third spatial layer, or a fourth spatial layer) is low, the bit in the first indication information indicates whether the second information carries indication information of a location of a nonzero coefficient at a first spatial layer.

It may be understood that the bit in the first indication information may further indicate whether the second information carries indication information of a location of a nonzero coefficient at the second spatial layer, the third spatial layer, the fourth spatial layer, or another spatial layer. Details are not described herein.

(3.1) When rank=1, in other words, when the rank of the terminal device is 1, the first information may not carry the first indication information. The network apparatus determines, based on $K^{NZ}$ reported by the terminal device, whether the second information from the terminal device carries the indication information of the location of the nonzero coefficient at the first spatial layer.

$K^{NZ}$ may be reported by using the first information. For example, $K^{NZ}$ is reported by using a UCI part 1.

When $K^{NZ} = K_1 M_v$, because the terminal device may completely report the nonzero coefficient (a nonzero coefficient of the weighting coefficient matrix) at the first spatial layer, the second information may not carry the indication information of the location of the nonzero coefficient at the first spatial layer.

(3.2) When rank=2, in other words, when the rank of the terminal device is 2, there are two solutions. Descriptions are separately provided below. A special case is that when $K^{NZ} = 2 * K_1 M_v$ and rank=2, the first information may not carry the first indication information. The network apparatus determines, based on $K^{NZ}$ reported by the terminal device, whether the second information from the terminal device carries indication information of locations of nonzero coefficients at the first spatial layer and the second spatial layer.

When $K^{NZ} = 2 * K_1 M_v$, because the terminal device may completely report the nonzero coefficients (nonzero coefficients of the weighting coefficient matrix) at the first spatial layer and the second spatial layer, the first information may not carry the first indication information, and the second information may not carry the indication information of the locations of the nonzero coefficients at the first spatial layer and the second spatial layer.

When $K^{NZ} < 2 * K_1 M_v$, the first information carries the first indication information, and the first indication information indicates whether the second information carries the indication information of the location of the nonzero coefficient at the first spatial layer.

For example, the first indication information includes one bit, and the bit indicates whether the second information carries the indication information of the location of the nonzero coefficient at the first spatial layer.

For example, when the first indication information is "1", it indicates that the second information does not carry the indication information of the location of the nonzero coefficient at the first spatial layer (a spatial layer 1), and in this case, the second information carries indication information of a location of a nonzero coefficient at the second spatial layer; when the first indication information is "0", it indicates that the second information carries indication information of locations of nonzero coefficients at the first spatial layer and the second spatial layer.

In another example, when the first indication information is "0", it indicates that the second information does not carry the indication information of the location of the nonzero coefficient at the first spatial layer (a spatial layer 1), and in this case, the second information carries indication information of a location of a nonzero coefficient at the second spatial layer; when the first indication information is "1", it indicates that the second information carries indication information of locations of nonzero coefficients at the first spatial layer and the second spatial layer.

(3.3) When rank=3, in other words, when the rank of the terminal device is 3, the first indication information includes one bit, and the bit indicates whether the second information carries the indication information of the location of the nonzero coefficient at the first spatial layer.

When the first indication information is "1", it indicates that the second information does not carry the indication information of the location of the nonzero coefficient at the first spatial layer (a spatial layer 1), and in this case, the second information carries indication information of locations of nonzero coefficients at the second spatial layer and the third spatial layer; when the first indication information is "0", it indicates that the second information carries indication information of locations of nonzero coefficients at the first spatial layer, the second spatial layer, and the third spatial layer.

(3.3) When rank=4, in other words, when the rank of the terminal device is 4, the first indication information includes one bit, and the bit indicates whether the second information carries the indication information of the location of the nonzero coefficient at the first spatial layer.

When the first indication information is "1", it indicates that the second information does not carry the indication information of the location of the nonzero coefficient at the first spatial layer (a spatial layer 1), and in this case, the second information carries indication information of locations of nonzero coefficients at the second spatial layer, the third spatial layer, and the fourth spatial layer; when the first indication information is "0", it indicates that the second information carries indication information of locations of nonzero coefficients at the first spatial layer, the second spatial layer, the third spatial layer, and the fourth spatial layer.

In a possible implementation, the first information and the second information are sent by using a same piece of signaling, or the first information and the second information are carried in a same piece of signaling. The same piece of signaling is a channel state information CSI feedback on a physical uplink shared channel (PUSCH) in the terminal device, or the same piece of signaling is a channel state information CSI feedback on a physical uplink control channel (PUCCH) in the terminal device.

In another possible implementation, the first information and the second information are carried in different signaling, in other words, the first information and the second information are sent by using different signaling.

The following uses an example in which the first information and the second information are carried in a same piece of signaling for description. The first information and the second information are carried in uplink control information (uplink control information, UCI), the first information is a UCI part 1 of the uplink control information, and the second information is a UCI part 2 of the uplink control information. It may be understood that the first information and the second information may alternatively be carried in other signaling. This is not limited herein.

502: The terminal device sends the first information and the second information to the network apparatus.

In this embodiment, the terminal device sends the first information and the second information to the network apparatus. For example, the terminal device sends the UCI to the network apparatus, where the UCI part 1 in the UCI is the first information, and the UCI part 2 in the UCI is the second information.

503: The network apparatus establishes a channel.

In this embodiment of this application, the first information sent by the terminal device to the network apparatus includes the first indication information, the first indication information indicates whether the second information sent by the terminal device to the network apparatus carries the indication information of the location of the nonzero coefficient, and the nonzero coefficients are used to constitute the weighting coefficient matrix of the codebook. Therefore, according to the foregoing method, while correct data transmission is ensured, a coding bit rate of the UCI sent by the terminal device to the network apparatus is reduced, a feedback coding bit rate is reduced, and a demodulation signal-to-noise ratio is reduced.

The following describes other solutions provided in embodiments of this application with reference to the foregoing embodiment.

(4) When $K^{NZ} \le 2K_0$ and $\beta=1$, specific steps are similar to those in FIG. 5. The terminal device sends the first information to the network apparatus, where the first information includes the total quantity ($K^{NZ}$) of nonzero coefficients at all the spatial layers of the terminal device and the RI (if reported) of the terminal device, and the weighting coefficient matrix in the codebook includes the nonzero coefficient.

In other words, when the first information is the UCI part 1, an existing UCI part 1 is not modified. The network apparatus determines, based on the total quantity ($K^{NZ}$) of nonzero coefficients at all the spatial layers of the terminal device in the first information, whether the second information (the UCI part 2) carries the indication information of the location of the nonzero coefficient.

Descriptions are separately provided below. When the rank of the terminal device is equal to 1, and the total quantity of nonzero coefficients at all the spatial layers of the terminal device included in the first information is equal to $K_1M_1$, the second information sent by the terminal device to the network apparatus does not carry the indication information of the location of the nonzero coefficient. $M_1$ is a quantity of frequency domain bases at a first spatial layer (or a quantity of columns of a frequency domain compression matrix at the first spatial layer), and $K_1$ is a quantity of channel state information reference signal CSI-RS ports selected by the terminal device.

When the rank of the terminal device is equal to 2, and the total quantity of nonzero coefficients at all the spatial layers of the terminal device included in the first information is equal to $2 * K_1M_v$, the second information sent by the terminal device to the network apparatus does not carry the indication information of the location of the nonzero coefficient. $M_v$ is a quantity of frequency domain bases at a $v^{th}$ spatial layer, $K_1$ is a quantity of channel state information reference signal CSI-RS ports selected by the terminal device, and v is a positive integer.

The terminal device sends the second information to the network apparatus, where the first information and the second information are used to determine channel state information CSI.

Further, when the rank of the terminal device is equal to 1, and the total quantity of nonzero coefficients at all the spatial layers of the terminal device included in the first information is less than $K_1M_1$, the second information sent by the terminal device to the network apparatus carries the indication information of the location of the nonzero coefficient. In other words, when $K^{NZ}$ in the UCI part 1 < $K_1M_1$ and rank=1, the second information sent by the terminal device to the network apparatus carries the indication information of the location of the nonzero coefficient, in other words, the UCI part 2 includes indication information (a bitmap) of a location of a nonzero coefficient at a first spatial layer.

Further, when the rank of the terminal device is equal to 2, and the total quantity of nonzero coefficients at all the spatial layers of the terminal device included in the first information is less than $2 * K_1M_v$, the second information sent by the terminal device to the network apparatus carries indication information of locations of nonzero coefficients at a first spatial layer and a second spatial layer. In other words, when $K^{NZ}$ in the UCI part 1 < $2 * K_1M_v$ and rank=2, the second information sent by the terminal device to the network apparatus carries the indication information of the locations of the nonzero coefficients at the first spatial layer and the second spatial layer, in other words, the UCI part 2 includes indication information (a bitmap) of a location of a nonzero coefficient at the first spatial layer and indication information (a bitmap) of a location of a nonzero coefficient at the second spatial layer.

Further, when the rank of the terminal device is greater than 2, the second information sent by the terminal device to the network apparatus carries indication information of a location of a nonzero coefficient at each spatial layer. For example, rank=3, and the UCI part 2 includes indication information (a bitmap) of a location of a nonzero coefficient at a first spatial layer, indication information (a bitmap) of a location of a nonzero coefficient at a second spatial layer, and indication information (a bitmap) of a location of a nonzero coefficient at a third spatial layer.

(5) When β=1, specific steps are similar to those in FIG. 5. The terminal device sends the first information to the network apparatus, where the first information includes a quantity of nonzero coefficients at each spatial layer of the terminal device, and the weighting coefficient matrix in the codebook includes the nonzero coefficient. In other words, the first information (the UCI part 1) does not include the total quantity $K^{NZ}$ of nonzero coefficients at all the spatial layers in the terminal device, but includes the quantity of nonzero coefficients at each spatial layer, for example, $K_l^{NZ}$, where *l* is an index of a spatial layer, *l* is greater than 1 and less than or equal to *v*, and v is a quantity of spatial layers of all the spatial layers in the terminal device. For example, when the network apparatus indicates that the rank supported by the terminal device is 2, the terminal device supports a first spatial layer and a second spatial layer, where the first information includes a quantity $K_1^{NZ}$ of nonzero coefficients at the first spatial layer and a quantity $K_2^{NZ}$ of nonzero coefficients at the second spatial layer.

The terminal device determines, based on a quantity of nonzero coefficients at any spatial layer, whether the second information (the UCI part 2) carries indication information of a location of a nonzero coefficient at the spatial layer. For example, when the quantity $K_1^{NZ}$ of nonzero coefficients at the first spatial layer is equal to $K_1 M_1$ (a maximum quantity of nonzero coefficients at the first spatial layer), the second information sent by the terminal device to the network apparatus does not carry indication information indicating a location of a nonzero coefficient at the first spatial layer. When the quantity of nonzero coefficients at the first spatial layer is $K_1^{NZ} < K_1 M_1$ (the maximum quantity of nonzero coefficients at the first spatial layer), the second information sent by the terminal device to the network apparatus carries the indication information indicating the location of the nonzero coefficient at the first spatial layer.

In another example, when the quantity $K_2^{NZ}$ of nonzero coefficients at the second spatial layer is equal to $K_1 M_2$ (a maximum quantity of nonzero coefficients at the second spatial layer), the second information sent by the terminal device to the network apparatus does not carry indication information indicating a location of a nonzero coefficient at the second spatial layer. When the quantity of nonzero coefficients at the second spatial layer is $K_2^{NZ} < K_1 M_2$ (the maximum quantity of nonzero coefficients at the second spatial layer), the second information sent by the terminal device to the network apparatus carries the indication information indicating the location of the nonzero coefficient at the second spatial layer. $M_2$ is a quantity of frequency domain bases at the second spatial layer (or a quantity of columns of a frequency domain compression matrix at the second spatial layer).

It may be understood that the first information and the second information may alternatively be sent by using another message. This is not limited herein.

(6) When β=1, specific steps are similar to those in FIG. 5. In step 500b, the network apparatus indicates, by using the configuration information, that β=1 to the terminal device. For example, the network apparatus indicates, by using RRC signaling, that β=1 to the terminal device. In this case, the UCI part 1 sent by the terminal device to the network apparatus does not include the total quantity $K^{NZ}$ of nonzero coefficients of all the spatial layers in the terminal device. The UCI part 2 sent by the terminal device to the network apparatus includes all nonzero coefficients (all the nonzero coefficients) of the weighting coefficient matrix. The UCI part 2 does not include the indication information of the location of the nonzero coefficient.

In other words, the UCI part 1 includes one or more of the following information: the RI, the CQI, or the like.

The UCI part 2 includes one or more of the following information: the strongest coefficient indicator (strongest coefficient indicator, SCI), or the CSI-RS port selection indication information, including but not limited to: the FD basis subset selection indicator (FD basis subset selection indicator), the LC coefficient, the SD basis subset selection indicator (SD basis subset selection indicator), the SD oversampling factor (oversampling factor), or the like.

In a possible implementation, when β=1, $M_v = 1$.

In another possible implementation, when β=1, $M_v = 1$, where the rank is less than or equal to 2, in other words, v is less than or equal to 2.

(7) When $K^{NZ}$ = rank, the terminal device feeds back only a strongest coefficient (strongest coefficient) at each spatial layer. The UCI part 2 does not include the indication information of the location of the nonzero coefficient.

The UCI part 2 includes one or more of the following information: the strongest coefficient indicator (strongest coefficient indicator, SCI), or the CSI-RS port selection indication information, including but not limited to: the FD basis subset selection indicator (FD basis subset selection indicator), the LC coefficient, the SD basis subset selection indicator (SD basis subset selection indicator), the SD oversampling factor (oversampling factor), or the like.

Specifically, because the UCI part 2 includes the strongest coefficient indicator (SCI), a location of the strongest coefficient may be learned based on the SCI. Therefore, the indication information of the location of the nonzero coefficient does not need to be included.

For example, when rank=1 and $K^{NZ} = 1$, the UCI part 2 does not include the indication information of the location of the nonzero coefficient.

In another example, when rank=2 and $K^{NZ} = 2$, the terminal device reports a strongest coefficient at a first spatial layer and a strongest coefficient at a second spatial layer. The UCI part 2 does not include the indication information of the location of the nonzero coefficient. A scenario in which rank=3 or rank=4 is similar to the foregoing scenarios, and details are not described herein.

The foregoing mainly describes the solutions provided in embodiments of this application from a perspective of the method. It may be understood that, to implement the foregoing functions, a communication apparatus includes a corresponding hardware structure and/or software module for executing each function. A person skilled in the art should easily be aware that, in combination with modules and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each corresponding function, or two or more functions may be integrated into one transceiver module. The integrated module may be implemented in a form of hardware, or may be implemented in a form of a software functional module. It should be noted that, in embodiments of this application, division into the modules is an example and is merely logical function division, and may be other division during actual implementation.

The following describes in detail the communication apparatus in this application. FIG. 6 is a schematic embodiment diagram of a communication apparatus according to an embodiment of this application. The communication apparatus may be further deployed in a network apparatus, a chip, or a chip system, and the communication apparatus 600 includes:

a transceiver module 601, configured to send first information to a network apparatus, where the first information includes a total quantity of nonzero coefficients at all spatial layers of a terminal device, and the nonzero coefficients are used to constitute a weighting coefficient matrix in a codebook.

The first information further includes first indication information, and the first indication information indicates whether second information sent by the terminal device to the network apparatus carries indication information of a location of a nonzero coefficient.

The transceiver module 601 is further configured to send the second information to the network apparatus, where the first information and the second information are used to determine channel state information CSI.

In a possible implementation,

the first information and the second information are carried in a same piece of signaling, and the same piece of signaling is uplink control information UCI.

In a possible implementation,

the first information is a UCI part 1 of the uplink control information, and the second information is a UCI part 2 of the uplink control information.

In a possible implementation,

a maximum quantity of nonzero coefficients of the terminal device is equal to a maximum quantity of nonzero coefficients that the network apparatus allows the terminal device to report.

In a possible implementation,

the first indication information includes N bits, where N is an integer greater than or equal to 1, and N is equal to a rank of the terminal device; and

each bit in the first indication information corresponds to a nonzero coefficient at each spatial layer, and a bit in the first indication information indicates whether the second information carries indication information of a location of a nonzero coefficient at a spatial layer corresponding to the bit.

In a possible implementation,

the first indication information includes one bit, and the first indication information indicates whether the second information carries indication information of a location of a nonzero coefficient at a first spatial layer.

In a possible implementation,

the first information further includes a rank indicator RI, and the RI indicates the rank of the terminal device; the first indication information includes two bits, and the first indication information implements four combinations by using the two bits, where the four combinations include a first combination, a second combination, a third combination, and a fourth combination; and

the first indication information jointly indicates, by using the four combinations and the RI, whether the second information carries indication information of a location of a nonzero coefficient at each spatial layer.

In a possible implementation,

when the rank of the terminal device is equal to 1, and the first indication information is the first combination, the first indication information indicates that the second information does not carry indication information of a location of a nonzero coefficient at a first spatial layer; or

when the rank of the terminal device is equal to 1, and the first indication information is the second combination, the third combination, or the fourth combination, the first indication information indicates that the second information carries the indication information of the location of the nonzero coefficient at the first spatial layer.

In a possible implementation,

when the rank of the terminal device is equal to 2, and the first indication information is the first combination, the first indication information indicates that the second information carries indication information of locations of nonzero coefficients at the first spatial layer and a second spatial layer;

when the rank of the terminal device is equal to 2, and the first indication information is the second combination, the first indication information indicates that the second information does not carry the indication information of the location of the nonzero coefficient at the first spatial layer, and the second information carries indication information of a location of a nonzero coefficient at the second spatial layer;

when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer; or

when the rank of the terminal device is equal to 2, and the first indication information is the fourth combination, the first indication information indicates that the second information does not carry the indication information of the locations of the nonzero coefficients at the first spatial layer and the second spatial layer.

In a possible implementation,

when the rank of the terminal device is greater than 2, and the first indication information is the first combination, the first indication information indicates that the second information carries indication information of locations of the nonzero coefficients at all the spatial layers;

when the rank of the terminal device is greater than 2, and the first indication information is the second combination, the first indication information indicates that the second information does not carry the indication information of the location of the nonzero coefficient at the first spatial layer, and the second information carries indication information of locations of nonzero coefficients at spatial layers other than the first spatial layer in all the spatial layers;

when the rank of the terminal device is greater than 2, and the first indication information is the third combination, the first indication information indicates that the second information does not carry the indication information of the location of the nonzero coefficient at the second spatial layer, and the second information carries indication information of locations of nonzero coefficients at spatial layers other than the second spatial layer in all the spatial layers; or

when the rank of the terminal device is greater than 2, and the first indication information is the fourth combination, the first indication information indicates that the second information does not carry indication information of a location of a nonzero coefficient at a third spatial layer, and the second information carries indication information of locations of nonzero coefficients at spatial layers other than the third spatial layer in all the spatial layers.

In a possible implementation,

the transceiver module 601 is further configured to receive first configuration information from the network apparatus, where the first configuration information is used to configure a set of ranks that are optional for the terminal device; a processing module 602 is configured to select, based on the first configuration information, the rank of the terminal device from the set of ranks that are optional for the terminal device; and
the transceiver module 601 is further configured to send the rank indicator RI to the network apparatus, where the RI indicates the rank of the terminal device.

In a possible implementation,
the rank of the terminal device is configured by the network apparatus.
In another example,
the transceiver module 601 is configured to send first information to a network apparatus, where the first information includes a total quantity of nonzero coefficients at all spatial layers of a terminal device and a rank indicator RI, the RI indicates a rank of the terminal device, and a weighting coefficient matrix in a codebook includes the nonzero coefficient.
When the rank of the terminal device is equal to 1, and the total quantity of nonzero coefficients at all the spatial layers of the terminal device included in the first information is equal to $K_1M_1$, second information sent by the terminal device to the network apparatus does not carry indication information of a location of a nonzero coefficient, where $M_1$ is a quantity of frequency domain bases at a first spatial layer, and $K_1$ is a quantity of channel state information reference signal CSI-RS ports selected by the terminal device.
When the rank of the terminal device is equal to 2, and the total quantity of nonzero coefficients at all the spatial layers of the terminal device included in the first information is equal to $2 * K_1M_v$, the second information sent by the terminal device to the network apparatus does not carry the indication information of the location of the nonzero coefficient, where $M_v$ is a quantity of frequency domain bases at a $v^{th}$ spatial layer, $K_1$ is the quantity of channel state information reference signal CSI-RS ports selected by the terminal device, and v is a positive integer.
The transceiver module 601 is further configured to send the second information to the network apparatus, where the first information and the second information are used to determine channel state information CSI.
In a possible implementation,
the first information and the second information are carried in a same piece of signaling, the same piece of signaling is uplink control information UCI, the first information is a UCI part 1 of the uplink control information, and the second information is a UCI part 2 of the uplink control information.
In a possible implementation,
when the rank of the terminal device is equal to 1, and the total quantity of nonzero coefficients at all the spatial layers of the terminal device included in the first information is less than $K_1M_1$, the second information sent by the terminal device to the network apparatus carries the indication information of the location of the nonzero coefficient.
In a possible implementation,
when the rank of the terminal device is equal to 2, and the total quantity of nonzero coefficients at all the spatial layers of the terminal device included in the first information is less than $2 * K_1M_v$, the second information sent by the terminal device to the network apparatus carries indication information of locations of nonzero coefficients at the first spatial layer and a second spatial layer.
In a possible implementation,
when the rank of the terminal device is greater than 2, the second information sent by the terminal device to the network apparatus carries indication information of a location of a nonzero coefficient at each spatial layer.
In another example, the transceiver module 601 is configured to send first information to a network apparatus, where the first information includes a quantity of nonzero coefficients at each spatial layer of a terminal device, and a weighting coefficient matrix in a codebook includes the nonzero coefficient.
The transceiver module 601 is further configured to: when the quantity of nonzero coefficients at any spatial layer in the first information is equal to $K_1 M_v$, second information sent to the network apparatus does not carry indication information indicating a location of a nonzero coefficient at the spatial layer, where $M_v$ is a quantity of frequency domain bases at a $v^{th}$ spatial layer, $K_1$ is a quantity of channel state information reference signal CSI-RS ports selected by the terminal device, and v is a positive integer.
The transceiver module 601 is further configured to send the second information to the network apparatus, where the first information and the second information are used to determine channel state information CSI.
In a possible implementation,
the first information and the second information are carried in a same piece of signaling, the same piece of signaling is uplink control information UCI, the first information is a UCI part 1 of the uplink control information, and the second information is a UCI part 2 of the uplink control information.
In a possible implementation,
the transceiver module 601 is further configured to: when the quantity of nonzero coefficients at any spatial layer in the first information $< K_1M_v$, the second information sent to the network apparatus carries the indication information of the location of the nonzero coefficient.
The communication apparatus in the foregoing embodiment may be a network apparatus, or may be a chip used in the network apparatus, another combined device or component that can implement a function of the network apparatus, or the like. When the communication apparatus is a network apparatus, the transceiver module may be a transceiver, where the transceiver may include an antenna, a radio frequency circuit, and the like; and the processing module may be a processor, for example, a baseband chip. When the communication apparatus is a component having a function of the network apparatus, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit (central processing unit, CPU).

The communication apparatus in the foregoing embodiment may be a terminal device, or may be a chip used in the terminal device, another combined device or component that can implement a function of the terminal device, or the like. When the communication apparatus is a terminal device, the transceiver module may be a transceiver, where the transceiver may include an antenna, a radio frequency circuit, and the like; and the processing module may be a processor, for example, a baseband chip. When the communication apparatus is a component having a function of the terminal device, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit.

It should be noted that content such as information exchange and an execution process between the modules/components in the communication apparatus is based on a same concept as the method embodiment corresponding to FIG. 5 in this application. For specific content, refer to the descriptions in the method embodiment in this application. Details are not described herein again.

It should be noted that, for a specific implementation of the communication apparatus and brought beneficial effects, refer to the descriptions in the method embodiment corresponding to FIG. 5. Details are not described herein again.

An embodiment of this application further provides a processing apparatus. The processing apparatus includes a processor and an interface. The processor is configured to perform the finite field encoding or decoding method in any one of the foregoing method embodiments.

It should be understood that the processing apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

"Implemented by using hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC (application-specific integrated circuit, application-specific integrated circuit) or a PLD (programmable logic device, programmable logic device). The PLD may further include an FPGA (field programmable gate array, field programmable gate array), a CPLD (complex programmable logic device, complex programmable logic device), and the like. These hardware processing circuits may be an independently packaged semiconductor chip (for example, packaged into an ASIC), or may be integrated with another circuit (for example, a CPU or a DSP) and then packaged into a semiconductor chip. For example, a plurality of hardware circuits and CPUs may be formed on a silicon base, and are independently packaged into a chip, where the chip is also referred to as a SoC; or a circuit that is configured to implement an FPGA function and a CPU may be formed on a silicon base, and are independently packaged into a chip, where the chip is also referred to as a SoPC (system on a programmable chip, system on a programmable chip).

This application further provides a communication system, including a terminal device and a network apparatus.

An embodiment of this application further provides a computer-readable storage medium, including instructions. When the instructions are run on a computer, the computer is enabled to control a network apparatus to perform any implementation shown in the method embodiment.

An embodiment of this application further provides a computer program product. The computer program product includes computer program code. When the computer program code is run on a computer, the computer is enabled to perform any implementation shown in the method embodiment.

An embodiment of this application further provides a chip system, including a memory and a processor. The memory is configured to store a computer program, and the processor is configured to invoke the computer program from the memory and run the computer program, to enable a chip to perform any implementation shown in the method embodiment.

An embodiment of this application further provides a chip system, including a processor. The processor is configured to invoke and run a computer program, to enable a chip to perform any implementation shown in the method embodiment.

In addition, it should be noted that the described apparatus embodiment is merely an example. The units described as separate parts may or may not be physically separate, and parts displayed as units may or may not be physical units, that is, may be located at one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, all functions that can be completed by a computer program can be easily implemented by using corresponding hardware, and a specific hardware structure used to implement a same function may be in various forms, for example, in a form of an analog circuit, a digital circuit, or a dedicated circuit. However, in this application, a software program implementation is generally a better implementation. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk, a ROM, a RAM, a magnetic disk, or an optical disc, and includes several instructions for instructing a computer device to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

It should be understood that "an embodiment" or "one embodiment" mentioned in the entire specification means that particular features, structures, or characteristics related to the embodiment are included in at least one embodiment of this application. Therefore, "in an embodiment" or "in one embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe interchangeability between the hardware and the software, the foregoing has generally described compositions and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network apparatus, or the like) to perform all or some of the steps of the methods described in embodiments of this application.

**Claims**

1. An information feedback method, wherein the method comprises:

   sending, by a terminal device, first information to a network apparatus, wherein the first information comprises a total quantity of nonzero coefficients corresponding to all spatial layers of the terminal device, and the nonzero coefficients are used to constitute a weighting coefficient matrix in a codebook; and
   sending, by the terminal device, second information to the network apparatus, wherein the first information and the second information are used to determine channel state information CSI.

2. The method according to claim 1, wherein
   when a rank of the terminal device is equal to 1, the total quantity of nonzero coefficients comprised in the first information indicates a maximum quantity of nonzero coefficients at a first spatial layer.

3. The method according to claim 1 or 2, wherein
   when the rank of the terminal device is equal to 2, the total quantity of nonzero coefficients comprised in the first information indicates a maximum quantity of nonzero coefficients at the first spatial layer and a second spatial layer.

4. The method according to any one of claims 1 to 3, wherein
   the first information is a UCI part 1 of uplink control information, and the second information is a UCI part 2 of the uplink control information.

5. The method according to any one of claims 1 to 4, wherein
   a maximum quantity of nonzero coefficients of the terminal device is equal to a maximum quantity of nonzero coefficients that the network apparatus allows the terminal device to report.

6. A communication apparatus, wherein

   a transceiver module is configured to send first information to a network apparatus, wherein the first information comprises a total quantity of nonzero coefficients corresponding to all spatial layers of a terminal device, and the nonzero coefficients are used to constitute a weighting coefficient matrix in a codebook; and
   the transceiver module is further configured to send second information to the network apparatus, wherein the first information and the second information are used to determine channel state information CSI.

7. The communication apparatus according to claim 6, wherein
   when a rank of the terminal device is equal to 1, the total quantity of nonzero coefficients comprised in the first information indicates a maximum quantity of nonzero coefficients at a first spatial layer.

8. The communication apparatus according to claim 6 or 7, wherein
   when the rank of the terminal device is equal to 2, the total quantity of nonzero coefficients comprised in the first information indicates a maximum quantity of nonzero coefficients at the first spatial layer and a second spatial layer.

9.  The communication apparatus according to any one of claims 6 to 8, wherein
    the first information is a UCI part 1 of uplink control information, and the second information is a UCI part 2 of the uplink control information.

10. The communication apparatus according to any one of claims 6 to 9, wherein
    a maximum quantity of nonzero coefficients of the terminal device is equal to a maximum quantity of nonzero coefficients that the network apparatus allows the terminal device to report.

11. An information feedback method, wherein the method comprises:

    sending, by a terminal device, first information to a network apparatus, wherein the first information comprises a total quantity of nonzero coefficients corresponding to all spatial layers of the terminal device, and the nonzero coefficients are used to constitute a weighting coefficient matrix in a codebook; and
    the first information further comprises first indication information, and the first indication information indicates whether second information sent by the terminal device to the network apparatus carries indication information of a location of a nonzero coefficient; and
    sending, by the terminal device, the second information to the network apparatus, wherein the first information and the second information are used to determine channel state information CSI.

12. The method according to claim 11, wherein
    the first information and the second information are carried in a same piece of signaling, and the same piece of signaling is uplink control information UCI.

13. The method according to claim 12, wherein
    the first information is a UCI part 1 of the uplink control information, and the second information is a UCI part 2 of the uplink control information.

14. The method according to any one of claims 11 to 13, wherein
    a maximum quantity of nonzero coefficients of the terminal device is equal to a maximum quantity of nonzero coefficients that the network apparatus allows the terminal device to report.

15. The method according to any one of claims 11 to 14, wherein

    the first indication information comprises N bits, N is an integer greater than or equal to 1, N is equal to a rank of the terminal device, and the rank is equal to a quantity of spatial layers of the terminal device; and
    each bit in the first indication information corresponds to each spatial layer, and a bit in the first indication information indicates whether the second information carries indication information of a location of a nonzero coefficient at a spatial layer corresponding to the bit.

16. The method according to any one of claims 11 to 14, wherein the first indication information comprises one bit, and the first indication information indicates whether the second information carries indication information of a location of a nonzero coefficient at a first spatial layer.

17. The method according to any one of claims 11 to 14, wherein

    the first indication information comprises two bits, and the first indication information implements four combinations by using the two bits, wherein the four combinations comprise a first combination, a second combination, a third combination, and a fourth combination; and
    the first indication information jointly indicates, by using the four combinations and a rank of the terminal device, whether the second information carries indication information of a location of a nonzero coefficient at each spatial layer.

18. The method according to claim 17, wherein jointly indicating whether the second information carries indication information of a location of a nonzero coefficient at each spatial layer comprises:

    when the rank of the terminal device is equal to 1, and the first indication information is the first combination,

the first indication information indicates that the second information does not carry indication information of a location of a nonzero coefficient at a first spatial layer; or

when the rank of the terminal device is equal to 1, and the first indication information is the second combination, the third combination, or the fourth combination, the first indication information indicates that the second information carries the indication information of the location of the nonzero coefficient at the first spatial layer.

19. The method according to claim 17 or 18, wherein jointly indicating whether the second information carries indication information of a location of a nonzero coefficient at each spatial layer comprises:

when the rank of the terminal device is equal to 2, and the first indication information is the first combination, the first indication information indicates that the second information carries indication information of locations of nonzero coefficients at the first spatial layer and a second spatial layer;

when the rank of the terminal device is equal to 2, and the first indication information is the second combination, the first indication information indicates that the second information does not carry the indication information of the location of the nonzero coefficient at the first spatial layer, and the second information carries indication information of a location of a nonzero coefficient at the second spatial layer;

when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer; or

when the rank of the terminal device is equal to 2, and the first indication information is the fourth combination, the first indication information indicates that the second information does not carry the indication information of the locations of the nonzero coefficients at the first spatial layer and the second spatial layer.

20. The method according to any one of claims 17 to 19, wherein jointly indicating whether the second information carries indication information of a location of a nonzero coefficient at each spatial layer comprises:

when the rank of the terminal device is greater than 2, and the first indication information is the first combination, the first indication information indicates that the second information carries indication information of locations of the nonzero coefficients at all the spatial layers;

when the rank of the terminal device is greater than 2, and the first indication information is the second combination, the first indication information indicates that the second information does not carry the indication information of the location of the nonzero coefficient at the first spatial layer, and the second information carries indication information of locations of nonzero coefficients at spatial layers other than the first spatial layer in all the spatial layers;

when the rank of the terminal device is greater than 2, and the first indication information is the third combination, the first indication information indicates that the second information does not carry the indication information of the location of the nonzero coefficient at the second spatial layer, and the second information carries indication information of locations of nonzero coefficients at spatial layers other than the second spatial layer in all the spatial layers; or

when the rank of the terminal device is greater than 2, and the first indication information is the fourth combination, the first indication information indicates that the second information does not carry indication information of a location of a nonzero coefficient at a third spatial layer, and the second information carries indication information of locations of nonzero coefficients at spatial layers other than the third spatial layer in all the spatial layers.

21. The method according to any one of claims 15 to 20, wherein the method further comprises:

receiving, by the terminal device, first configuration information from the network apparatus, wherein the first configuration information is used to configure a set of ranks that are optional for the terminal device;

selecting, by the terminal device based on the first configuration information, the rank of the terminal device from the set of ranks that are optional for the terminal device; and

sending, by the terminal device, a rank indicator RI to the network apparatus, wherein the RI indicates the rank of the terminal device.

22. The method according to any one of claims 15 to 20, wherein the rank of the terminal device is configured by the network apparatus.

23. A communication apparatus, comprising:

a transceiver module, configured to send first information to a network apparatus, wherein the first information comprises a total quantity of nonzero coefficients at all spatial layers of a terminal device, and the nonzero coefficients are used to constitute a weighting coefficient matrix in a codebook;

the first information further comprises first indication information, and the first indication information indicates whether second information sent by the terminal device to the network apparatus carries indication information of a location of a nonzero coefficient; and

the transceiver module is further configured to send the second information to the network apparatus, wherein the first information and the second information are used to determine channel state information CSI.

24. The communication apparatus according to claim 23, wherein
the first information and the second information are carried in a same piece of signaling, and the same piece of signaling is uplink control information UCI.

25. The communication apparatus according to claim 24, wherein
the first information is a UCI part 1 of the uplink control information, and the second information is a UCI part 2 of the uplink control information.

26. The communication apparatus according to any one of claims 23 to 25, wherein
a maximum quantity of nonzero coefficients of the terminal device is equal to a maximum quantity of nonzero coefficients that the network apparatus allows the terminal device to report.

27. The communication apparatus according to any one of claims 23 to 26, wherein

the first indication information comprises N bits, N is an integer greater than or equal to 1, N is equal to a rank of the terminal device, and the rank is equal to a quantity of spatial layers of the terminal device; and
each bit in the first indication information corresponds to a nonzero coefficient at each spatial layer, and a bit in the first indication information indicates whether the second information carries indication information of a location of a nonzero coefficient at a spatial layer corresponding to the bit.

28. The communication apparatus according to any one of claims 23 to 27, wherein the first indication information comprises one bit, and the first indication information indicates whether the second information carries indication information of a location of a nonzero coefficient at a first spatial layer.

29. The communication apparatus according to any one of claims 23 to 27, wherein

the first information further comprises a rank indicator RI, and the RI indicates the rank of the terminal device;
the first indication information comprises two bits, and the first indication information implements four combinations by using the two bits, wherein the four combinations comprise a first combination, a second combination, a third combination, and a fourth combination; and
the first indication information jointly indicates, by using the four combinations and the RI, whether the second information carries indication information of a location of a nonzero coefficient at each spatial layer.

30. The communication apparatus according to claim 29, wherein

when the rank of the terminal device is equal to 1, and the first indication information is the first combination, the first indication information indicates that the second information does not carry indication information of a location of a nonzero coefficient at a first spatial layer; or
when the rank of the terminal device is equal to 1, and the first indication information is the second combination, the third combination, or the fourth combination, the first indication information indicates that the second information carries the indication information of the location of the nonzero coefficient at the first spatial layer.

31. The communication apparatus according to claim 29 or 30, wherein

when the rank of the terminal device is equal to 2, and the first indication information is the first combination, the first indication information indicates that the second information carries indication information of locations of nonzero coefficients at the first spatial layer and a second spatial layer;
when the rank of the terminal device is equal to 2, and the first indication information is the second combination, the first indication information indicates that the second information does not carry the indication information of the location of the nonzero coefficient at the first spatial layer, and the second information carries indication information of a location of a nonzero coefficient at the second spatial layer;

when the rank of the terminal device is equal to 2, and the first indication information is the third combination, the first indication information indicates that the second information does not carry the indication information of the location of the nonzero coefficient at the second spatial layer, and the second information carries the indication information of the location of the nonzero coefficient at the first spatial layer; or

when the rank of the terminal device is equal to 2, and the first indication information is the fourth combination, the first indication information indicates that the second information does not carry the indication information of the locations of the nonzero coefficients at the first spatial layer and the second spatial layer.

32. The communication apparatus according to any one of claims 29 to 31, wherein

when the rank of the terminal device is greater than 2, and the first indication information is the first combination, the first indication information indicates that the second information carries indication information of locations of the nonzero coefficients at all the spatial layers;

when the rank of the terminal device is greater than 2, and the first indication information is the second combination, the first indication information indicates that the second information does not carry the indication information of the location of the nonzero coefficient at the first spatial layer, and the second information carries indication information of locations of nonzero coefficients at spatial layers other than the first spatial layer in all the spatial layers;

when the rank of the terminal device is greater than 2, and the first indication information is the third combination, the first indication information indicates that the second information does not carry the indication information of the location of the nonzero coefficient at the second spatial layer, and the second information carries indication information of locations of nonzero coefficients at spatial layers other than the second spatial layer in all the spatial layers; or

when the rank of the terminal device is greater than 2, and the first indication information is the fourth combination, the first indication information indicates that the second information does not carry indication information of a location of a nonzero coefficient at a third spatial layer, and the second information carries indication information of locations of nonzero coefficients at spatial layers other than the third spatial layer in all the spatial layers.

33. The communication apparatus according to any one of claims 27 to 32, wherein

the transceiver module is further configured to receive first configuration information from the network apparatus, wherein the first configuration information is used to configure a set of ranks that are optional for the terminal device;

a processing module is configured to select, based on the first configuration information, the rank of the terminal device from the set of ranks that are optional for the terminal device; and

the transceiver module is further configured to send the rank indicator RI to the network apparatus, wherein the RI indicates the rank of the terminal device.

34. The communication apparatus according to any one of claims 27 to 32, wherein the rank of the terminal device is configured by the network apparatus.

35. A communication apparatus, used in a terminal device, comprising:

at least one processor; and

a memory and a communication interface that are communicatively connected to the at least one processor, wherein

the memory stores instructions that can be executed by the at least one processor, and the at least one processor executes the instructions stored in the memory, to perform the method according to any one of claims 1 to 5 or 11 to 22.

36. A computer-readable storage medium, wherein the computer-readable storage medium stores a computer program (instructions); and when the program (instructions) is (are) executed by a processor, the method according to any one of claims 1 to 5 or 11 to 22 is implemented.

37. A chip system, wherein the chip system comprises at least one processor; the processor is configured to execute a computer program or instructions; and when the computer program or the instructions are executed in the at least one processor, the method according to any one of claims 1 to 5 or 11 to 22 is implemented.

38. A chip, wherein the chip is configured to execute a computer program or instructions; and when the computer program or the instructions are executed in the chip, the method according to any one of claims 1 to 5 or 11 to 22 is implemented.

39. A computer program product, comprising instructions, wherein when the instructions are run on a computer, the computer is enabled to perform the method according to any one of claims 1 to 5 or 11 to 22.

Terminal
device

Network
device

...

Terminal
device

FIG. 1a

Terminal
device

Terminal
device

FIG. 1b

FIG. 2

$$W = W_1 W_2 W_f^H \qquad W_f \in \mathbb{C}^{N_3 \times M_F}$$

FIG. 3a

Precoding matrix Precoding matrix
of a subband 1 of a subband $N_3$

$P=2(N_1*$
Tx $N_2)$

W

Rank

Frequency $N_3$

Space-frequency
matrix at a layer 1

FIG. 3b

Mv

Strongest
coefficient

L

L

Another polarized
strongest
coefficient

Nonzero coefficient reported by $K^{NZ}$

FIG. 4

| Terminal device | | Network apparatus |
|---|---|---|

500a: The terminal device sends a reference signal to the network apparatus

500b: The network apparatus sends configuration information to the terminal device

501: The terminal device determines first information and second information

502: The terminal device sends the first information and the second information to the network apparatus

503: The network apparatus establishes a channel

FIG. 5

Communication apparatus 600

601

602

| Transceiver module | Processing module |
|---|---|

FIG. 6

<div align="center">

**INTERNATIONAL SEARCH REPORT**

</div>

| | International application No. |
|---|---|
| | **PCT/CN2022/109899** |

**A. CLASSIFICATION OF SUBJECT MATTER**

H04B 7/0456(2017.01)i;  H04B 17/309(2015.01)i;  H04B 7/06(2006.01)i

According to International Patent Classification (IPC) or to both national classification and IPC

**B. FIELDS SEARCHED**

Minimum documentation searched (classification system followed by classification symbols)

H04B7/-,  H04B17/-

Documentation searched other than minimum documentation to the extent that such documents are included in the fields searched

Electronic data base consulted during the international search (name of data base and, where practicable, search terms used)

CNABS; CNTXT; CNKI; BAIDU: 信道状态信息, 非零系数, 叠加系数, 个数, 总和, 数量, 数目, 矩阵, 系数矩阵, 叠加系数矩阵, 预编码矩阵指示, 上行控制信息, 第一部分, 第二部分, 层, 秩; VEN: USTXT; EPTXT; WOTXT; IEEE; 3GPP: CSI, channel state information, coefficient non-zero coefficient, number, matrix , PMI, precoding matrix indicator, uplink control information, UCI, part 1, part 2, layer, rank, RI

**C. DOCUMENTS CONSIDERED TO BE RELEVANT**

| Category* | Citation of document, with indication, where appropriate, of the relevant passages | Relevant to claim No. |
|---|---|---|
| X | CN 112398518 A (DATANG MOBILE COMMUNICATIONS EQUIPMENT CO., LTD.) 23 February 2021 (2021-02-23) <br> claims 10-11, and description, paragraph [0284] | 1-3, 5-8, 10-12, 14-24, 26-39 |
| Y | CN 112398518 A (DATANG MOBILE COMMUNICATIONS EQUIPMENT CO., LTD.) 23 February 2021 (2021-02-23) <br> claims 10-11, and description, paragraph [0284] | 4-5, 9-10, 13-22, 25-39 |
| Y | 3GPP. "R1-1716901 WF for Open Issues on CSI Reporting" <br> *https://www.3gpp.org/ftp/tsg_ran/WG1_RL1/TSGR1_AH/NR_AH_1709/Docs*, <br> 25 September 2017 (2017-09-25), <br> p. 5 | 4-5, 9-10, 13-22, 25-39 |
| A | CN 113039728 A (SAMSUNG ELECTRONICS CO., LTD.) 25 June 2021 (2021-06-25) <br> entire document | 1-39 |
| A | CN 112187324 A (DATANG MOBILE COMMUNICATIONS EQUIPMENT CO., LTD.) 05 January 2021 (2021-01-05) <br> entire document | 1-39 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 September 2022** | **03 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| PCT/CN2022/109899 |

**C. DOCUMENTS CONSIDERED TO BE RELEVANT**

| Category* | Citation of document, with indication, where appropriate, of the relevant passages | Relevant to claim No. |
|---|---|---|
| A | CN 112312464 A (HUAWEI TECHNOLOGIES CO., LTD.) 02 February 2021 (2021-02-02)<br>entire document | 1-39 |
| A | CN 111836309 A (VIVO COMMUNICATION TECHNOLOGY CO., LTD.) 27 October 2020<br>(2020-10-27)<br>entire document | 1-39 |
| A | WO 2020223837 A1 (QUALCOMM INCORPORATED et al.) 12 November 2020<br>(2020-11-12)<br>entire document | 1-39 |

Form PCT/ISA/210 (second sheet) (January 2015)

**INTERNATIONAL SEARCH REPORT**
Information on patent family members

International application No.

**PCT/CN2022/109899**

| Patent document cited in search report | | | Publication date (day/month/year) | Patent family member(s) | | | Publication date (day/month/year) |
|---|---|---|---|---|---|---|---|
| CN | 112398518 | A | 23 February 2021 | CN | 112398518 | B | 10 June 2022 |
| CN | 113039728 | A | 25 June 2021 | KR | 20210061459 | A | 27 May 2021 |
| | | | | JP | 2022509944 | A | 25 January 2022 |
| | | | | US | 2020162142 | A1 | 21 May 2020 |
| | | | | EP | 3864767 | A1 | 18 August 2021 |
| | | | | WO | 2020101454 | A1 | 22 May 2020 |
| | | | | US | 2022069880 | A1 | 03 March 2022 |
| CN | 112187324 | A | 05 January 2021 | CN | 112187324 | B | 29 October 2021 |
| CN | 112312464 | A | 02 February 2021 | None | | | |
| CN | 111836309 | A | 27 October 2020 | None | | | |
| WO | 2020223837 | A1 | 12 November 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110898806